# EUROPEAN PATENT APPLICATION

(11) **EP 2 065 419 A1**
(43) Date of publication of application: **03.06.2009**
(21) Application number: 06798139.9
(22) Date of filing: 20.09.2006
(51) Int. Cl.: C08G 59/14, C08F 283/10

(54) **LINEAR (METH)ACRYLOYL-CONTAINING COMPOUND, STAR (METH)ACRYLOYL-CONTAINING COMPOUND AND PROCESS FOR PRODUCING THEM**

(71) Applicant: DIC Corporation, Tokyo 174-8520 (JP)
(72) Inventor: LEE, SeungTaeg, Sakura-shi Chiba 285-8668 (JP); JIN, Ren-Hua, Sakura-shi Chiba 285-8668 (JP); YU, Jing, 266101 (CN); HE, Hongwei, 266101 (CN); LUO, Dou, 266101 (CN)
(74) Representative: Albrecht, Thomas
(86) International application number: PCT/JP2006/318579
(87) International publication number: WO 2008/035404

(57) **Abstract**

A linear (meth)acryloyl-containing compound is offered, including a chemical compound having a structure in which structural units expressed by the following general formula (1) 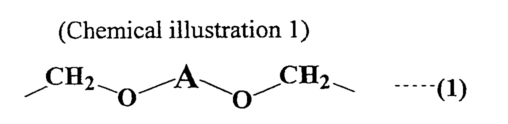 (In Formula (1), A is a bivalent hydrocarbon radical which may contain heteroatoms.) are connected by the following general formula (2) or (3) 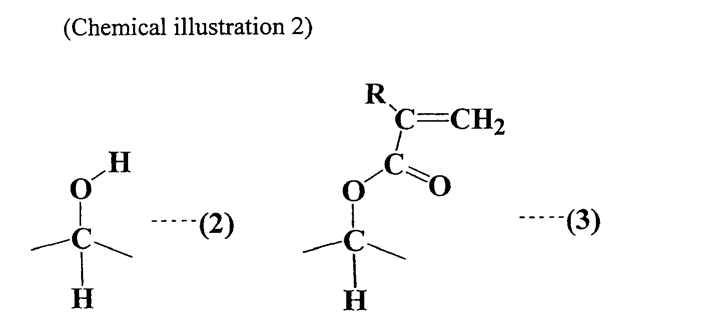 (In Formula (3), **R** is a hydrogen atom or a methyl group.)
(provided that the same substance or different substances may be connected as **A** of the aforementioned general formula (1)), and the molecular ends are epoxy groups or are expressed by the following general formula (4) 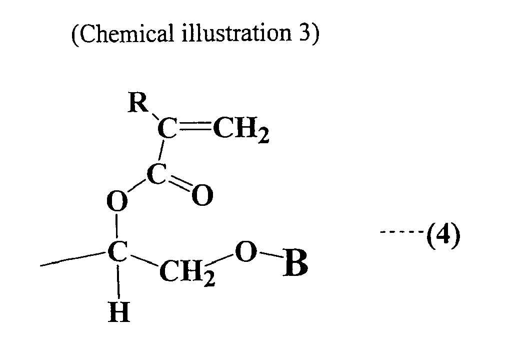 (In Formula (4), R is a hydrogen atom or methyl group, and **B** is a monovalent hydrocarbon radical.), wherein the totality of the structural units expressed by the aforementioned general formula (3) or the aforementioned general formula (4) includes an average of 3 or more in a single molecule, and the number average molecular weight is 500-10,000.

## Description

### TECHNICAL FIELD

The present invention relates to a (meth)acryloyl-containing compound which has satisfactory hardness, which can be widely used as material of hardening resin compositions, and which on average has 3 or more (meth)acryloyl groups in a single molecule.

### BACKGROUND ART

Compounds containing (meth)acryloyl groups are compounds which are widely used as material of hardening resin compositions cured with active energy rays or radicals, or as material of thermohardening resin compositions, and raw material of high polymer compounds. In particular, as epoxy (meth)acrylate is superior in terms of the heat resistance, chemical resistance, water resistance, adhesion, mechanical properties and so on of the obtained hardened material in comparison to hardened material obtained using other (meth)acrylates, it has been widely used in paint resin, printing ink, UV hardening resin, molding resin, films, adhesives, structural materials, solder resists of wiring boards, and so on.

With respect to conventional epoxy (meth)acrylates, there are bifunctional ones which use bisphenol epoxy resin as raw material, and there are multifunctional ones which use novolac resin as raw material, and these are classified for use according to the application as well as the performance level and the like of the subject hardened material. A bifunctional epoxy (meth)acrylate has fluidity even at room temperature, and is satisfactory with respect to handling, but (meth)acryloyl groups exist only at the two ends of the epoxy resin used as raw material, and it is inferior to multifunctional epoxy (meth)acrylate in terms of hardenability and hardening sensitivity. It further requires preparation of complex compositions - such as those involving combined use with multifunctional acrylic monomers - in order to enhance the crosslink density of the hardened material. Moreover, as it has (meth)acryloyl groups only at the molecular ends, major contraction occurs during hardening, inhibiting use in applications where adhesion and the like with base material is of particular importance. On the other hand, multifunctional epoxy (meth)acrylate is a solid, which makes it difficult to handle during preparation of the hardening composition. As it uses novolac epoxy resin as raw material, there is one (meth)acryloyl group per aromatic ring, the crosslink density of the obtained hardened material is high, and corrosion resistance and the like is excellent, but it also tends to be excessively hard, lacking in toughness, and brittle. Furthermore, when used in precise electrical applications, the numerous hydroxyl groups existing in the pertinent novolac epoxy (meth)acrylate exercise a negative influence.

Thus, with respect to conventional epoxy (meth)acrylate, it has been unavoidably necessary to adopt techniques which make combined use of other monomers or the like in order to adjust crosslink density, and a (meth)acryloyl-containing compound has not existed which combines handleability and hardenability in good balance along with electrical properties and the like of the obtained hardened material.

In order to endow epoxy (meth)acrylate with other performance such as developability, it has been necessary to introduce functional groups other than (meth)acryloyl groups. For example, acid-pendant epoxy (meth)acrylates (see, e.g., Patent Literature 1 and 2) have been disclosed which introduce carboxyl groups by causing the reaction of acid anhydride or the like with the secondary hydroxyl groups existing in epoxy (meth)acrylate.

However, with respect to acid-pendant epoxy (meth)acrylates, as they basically use the aforementioned bifunctional epoxy (meth)acrylate or multifunctional epoxy (meth)acrylate as raw material, it has been difficult to adjust the balance of hardenability and performance that depends on the crosslink density of the hardened material. Moreover, acid-pendant epoxy (meth)acrylate is obtained by causing the reaction of epoxy resin and unsaturated monobasic acid, and by subsequently causing the additional reaction of polybasic anhydride or the like, and it is therefore necessary to conduct reaction in at least two stages to introduce other functional groups into the epoxy (meth)acrylate.

There also exist compounds - so-called half-ester type epoxy (meth)acrylates - which have a (meth)acryloyl group and another functional group (epoxy group) in a single molecule and which are obtained by using an insufficient quantity of unsaturated monobasic acid relative to the epoxy groups in the epoxy resin. However, it is well known that this type of epoxy (meth)acrylate has very poor preservation stability, and tends to produce higher molecular weight (gelling). This is thought to be due to the high activity of the hydroxyl groups produced by the reaction of epoxy groups and unsaturated monobasic acid, with the result that reaction with remaining epoxy groups progresses even at room temperature.

Thus, there has not previously existed a manufacturing method for obtaining a compound by single-stage reaction which is well endowed with hardenability by active energy rays, radicals and the like or thermohardenability, which on average has 3 or more (meth)acryloyl groups in a single molecule, and which also has epoxy groups capable of cationic hardening.

Patent literature 1: Japanese Unexamined Patent Application, First Publication No. H09-87346.
Patent literature 2: Japanese Unexamined Patent Application, First Publication No. H11-181050.

### DISCLOSURE OF THE INVENTION

### PROBLEM TO BE SOLVED BY THE INVENTION

In light of the foregoing circumstances, the problem that the present invention is to solve is to offer a (meth)acryloyl-containing compound which on average has 3 or more (meth)acryloyl groups in a single molecule, which has satisfactory hardenability, and which further facilitates adjustment of the crosslink density of obtained hardened material, particularly a (meth)acryloyl-containing compound which is useful as material of resin compositions that also enable application of cationic hardening systems, as well as a method of manufacturing the pertinent (meth)acryloyl-containing compound which has an easy industrial manufacturing process.

### MEANS FOR SOLVING THE PROBLEM

As a result of diligent study aimed at solving the aforementioned problem, the present inventors discovered that a compound obtained by introducing (meth)acryloyl groups at the secondary hydroxyl groups existing in large quantity in linear or star epoxy resin so that there are an average of 3 or more (meth)acryloyl groups in a single molecule not only has satisfactory hardenability, but also renders adjustment of the crosslink density of hardened material structurally easy. By conducting a reaction which introduces (meth)acryloyl groups at the pertinent secondary hydroxyl groups using a specific catalyst, it was further discovered that one obtains a multi-functional (meth)acryloyl-containing compound without engendering a side reaction producing higher molecular weight (gelling), and also that the epoxy groups in the epoxy resin used as raw material are able to remain in the reaction product without ring opening, thereby enabling obtainment by single-stage reaction of a compound having epoxy groups and (meth)acryloyl groups in a single molecule, and perfecting the present invention.

Thus, a first aspect of the present invention offers a linear (meth)acryloyl-containing compound, which is a chemical compound having a structure in which structural units expressed by the following general formula (1)

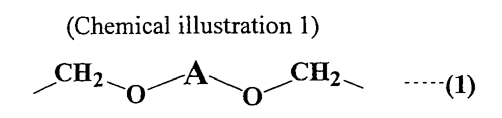

(In Formula (1), A is a bivalent hydrocarbon radical which may contain heteroatoms.) are connected by the following general formula (2) or (3)

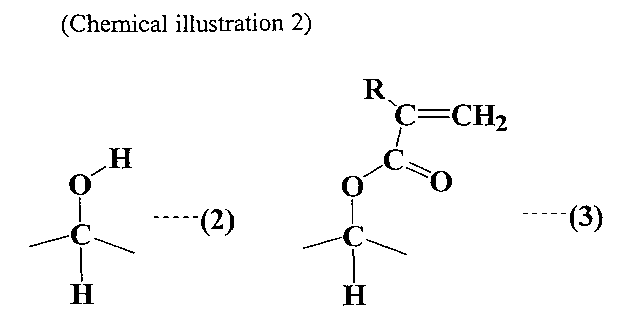

(In Formula (3), **R** is a hydrogen atom or a methyl group.)
(provided that the same substance or different substances may be connected as **A** of the aforementioned general formula (1)), and the molecular ends are epoxy groups or are expressed by the following general formula (4)

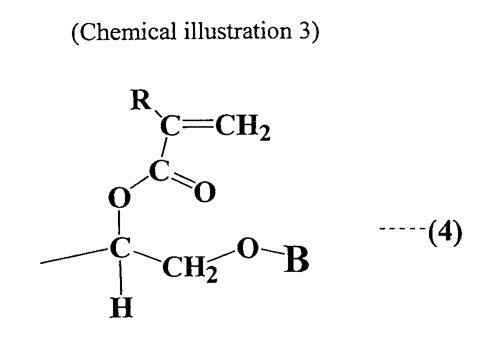

(In Formula (4), **R** is a hydrogen atom or methyl group, and **B** is a monovalent hydrocarbon radical.);
wherein the totality of the structural units expressed by the aforementioned general formula (3) or the aforementioned general formula (4) includes an average of 3 or more in a single molecule, and the number average molecular weight is 500-10,000.

Furthermore, a second aspect of the present invention offers a star (meth)acryloyl-containing compound expressed by the following general formula (5)

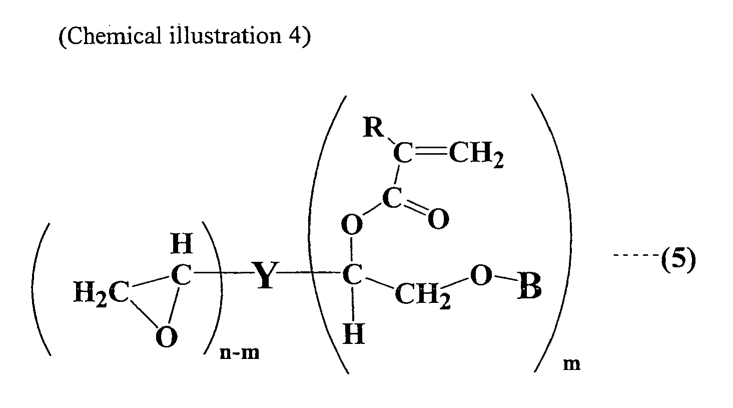

(In Formula (5), **R** is a hydrogen atom or a methyl group, **B** is a monovalent hydrocarbon radical, **Y** is a residue obtained by excluding epoxy groups from multifunctional epoxy resin having an average of **n** epoxy groups (provided that **n** is 3 or more), and **m** is an integer of 3 or more (provided that **n** ≥ **m**).), wherein the number average molecular weight is 800-10,000.

Still further, a third aspect of the present invention offers a method of manufacturing (meth)acryloyl-containing compounds, which uses epoxy resin (I) having 3 or more of the structural units expressed by the following structural formula (6)

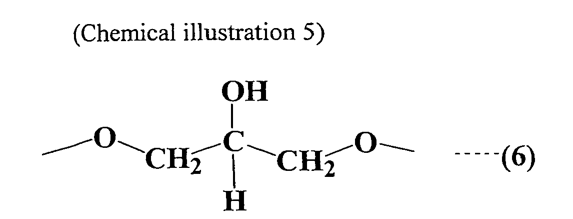

in a single molecule, and alkyl ester (meth)acrylate (II), and which obtains a compound having on average 3 or more (meth)acryloyl groups in a single molecule by conducting an ester exchange reaction in the presence of a polystannoxane catalyst (III) to introduce (meth)acryloyl groups at the hydroxyl groups of the aforementioned general formula (6).

### EFFECTS OF THE INVENTION

The linear (meth)acryloyl-containing compound of the present invention has on average 3 or more (meth)acryloyl groups in a single molecule, and exhibits greater hardenability and higher sensitivity than conventional bifunctional linear epoxy (meth)acrylate. In terms of its structure, by selecting epoxy resin for use as raw material, it is possible to facilitate preparation of the molecular weight per (meth)acryloyl group (that is, the concentration of the (meth)acryloyl groups), and it is possible to adjust the crosslink density of the hardened material even without using another acrylic monomer or the like in combination. Moreover, as it is possible not to leave any hydroxyl groups in the molecule, it may even be used as material in precise electrical applications and the like.

As the star (meth)acryloyl-containing compound of the present invention is multifunctional, it has excellent hardenability and sensitivity. Furthermore, compared with multifunctional epoxy (meth)acrylate obtained using novolac epoxy resin as raw material, it facilitates creation of a regular crosslinked structure, which is attributable to having one (meth)acryloyl group in a single side chain extending from the central part of the star. In addition, as molecular weight per (meth)acryloyl group is large, it is possible to obtain a hardened material that is not excessively hard and that has appropriate toughness. As it is possible not to leave any hydroxyl groups in the molecule, it can also be used as material for precise electrical applications and the like. Furthermore, in the case where there are aromatic rings in the central portion of the star structure, it is also possible to impart intermolecular π-π stacking capability, thereby enabling enhancement of such properties as heat resistance, corrosion resistance and mechanical strength with respect to hardened material.

From the foregoing, the (meth)acryloyl-containing compound of the present invention is able to produce hardened material which has excellent heat resistance, corrosion resistance, mechanical strength and so on, and which also has satisfactory electrical properties. Moreover, it is also possible to have (meth)acryloyl groups and epoxy groups existing in a single molecule, and in such cases it is also possible not to have any hydroxyl groups capable of reacting with epoxy groups, resulting in excellent preservation stability, and enabling use as material in resin compositions of various hardening systems, particularly in resin compositions of cationic hardening systems with satisfactory reactivity. Accordingly, it can be used in a wide range of applications such as paint resin, printing ink, UV hardening resin, cationic hardening resin, molding resin, adhesives, and solder resists of wiring boards.

The manufacturing method of the (meth)acryloyl-containing compound of the present invention does not engender reactions producing higher molecular weight (gelling) as a result of side reactions such as Michael addition reaction of the introduced (meth)acryloyl groups, and is further able to obtain a compound having epoxy groups and (meth)acryloyl groups by a single-stage reaction, thereby demonstrating a high degree of usefulness as an industrial manufacturing method.

### BEST MODE FOR CARRYING OUT THE INVENTION

With respect to the present invention, (meth)acryloyl group is a general appellation of acryloyl group and methacryloyl group, and a (meth)acryloyl-containing compound may contain both groups in a single molecule. Moreover, the linear (meth)acryloyl-containing compound of the present invention has multiple structural units expressed by the aforementioned general formula (1) in the portion having the longest coupling length in a single molecule, and at both ends thereof has epoxy groups or groups expressed by the aforementioned general formula (4) which are molecular end structures. For example, it may have branched parts in the hydrocarbon radical (i.e., may contain tertiary or quaternary carbon atoms), and within hydrocarbon radicals containing heteroatoms that are trivalent or higher such as nitrogen atoms and phosphorus atoms, it may exhibit branched structure in the pertinent heteroatom portion. Furthermore, the star (meth)acryloyl-containing compound of the present invention refers to a compound wherein there exist two or more parts having the longest coupling length in a single molecule, and the two ends of each such part are epoxy groups or groups expressed by the aforementioned general formula (4) which are molecular end structures.

The linear (meth)acryloyl-containing compound which is the first aspect of the present invention has a structure in which structural units expressed by the following general formula (1)

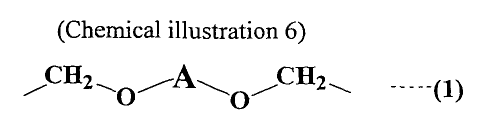

(In Formula (1), A is a bivalent hydrocarbon radical which may contain heteroatoms.) are connected by the following general formula (2) or (3)

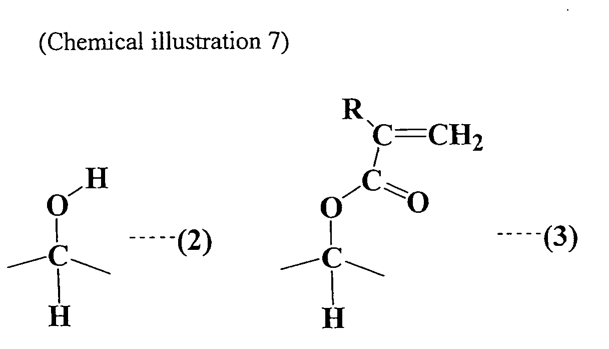

(In Formula (3), **R** is a hydrogen atom or a methyl group.)
(provided that the same substance or different substances may be connected as **A** of the aforementioned general formula (1)), and the molecular ends are epoxy groups or are expressed by the following general formula (4)

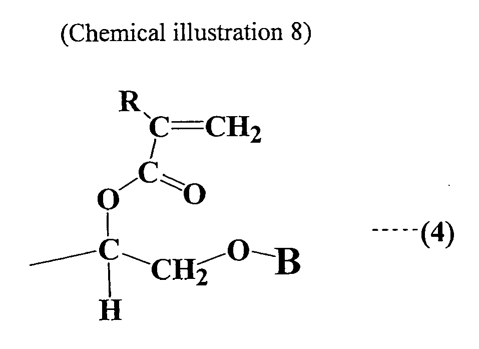

(In Formula (4), **R** is a hydrogen atom or methyl group, and **B** is a monovalent hydrocarbon radical.);
wherein the totality of the structural units expressed by the aforementioned general formula (3) or the aforementioned general formula (4) includes an average of 3 or more in a single molecule, and the number average molecular weight is 500-10,000.

The (meth)acryloyl groups in the linear (meth)acryloyl-containing compound of the present invention exist at parts of side chains relative to the molecular chain having the longest coupling length in a single molecule, and it is indispensable from the standpoint of satisfactory hardenability and sensitivity that an average of 3 or more be contained in a single molecule. With respect to the pertinent (meth)acryloyl groups, by selecting the structural units which configure the straight-chain portion, it is possible to easily adjust their concentration in a single molecule, that is, the molecular weight per (meth)acryloyl group. For example, when using residue excluding 2 hydroxyl groups from bisphenol as **A** in the aforementioned general formula (1) as described below, it is possible to obtain approximately the same concentration as with conventional bifunctional epoxy (meth)acrylate, and to have crosslink density in an appropriate range while having multifunctionality, thereby obtaining hardened material which has both toughness and strength. Moreover, by having the (meth)acryloyl groups exist in a dispersed manner in the molecule, contraction during hardening is mild, resulting in satisfactory adhesion with base material, and the absence of cracking or the like in the hardened material. This is a major characteristic not found with conventional epoxy (meth)acrylate. It can be used without conducting troublesome studies pertaining to selection and blending of other acrylic monomers to be used in combination in order to adjust the performance balance and prevent cracking and the like of hardened material, thereby opening up a wide range of industrial applications. Furthermore, the hydroxyl groups of the aforementioned general formula (2) have low activity, and - similar to the secondary hydroxyl groups in common epoxy resin - they do not react at room temperature with the epoxy groups at the ends, with the result that preservation stability of the compound is also satisfactory.

It is also indispensable that the number average molecular weight of the linear (meth)acryloyl-containing compound of the present invention be 500-10,000. It is unsuitable when number average molecular weight is less than 500, as the heat resistance and corrosion resistance of the obtained hardened material are insufficient; and it is unsuitable when in excess of 10,000, as industrial procurement of the epoxy resin which is a raw material when conducting manufacture by the below-described manufacturing method of the present invention is difficult, and furthermore the softening point becomes excessively high, compatibility cannot be maintained with the alkyl ester (meth)acrylate which is another raw material, and ester exchange reaction is inhibited. A particularly preferable number average molecular weight is 1,500-5,000. In the present invention, number average molecular weight is measured by using GPC (gel permeation chromatography), dissolving a 0.1 g sample in 10 ml of THF (tetrahydrofuran), and injecting 50 µl of this sample solution into a column; it is a converted value using polystyrene of known molecular weight as the reference material.

**A** of the aforementioned general formula (1) is a bivalent hydrocarbon radical which may include heteroatoms such as nitrogen atoms, oxygen atoms and phosphorus atoms. From the standpoint of excellent corrosion resistance and heat resistance of the obtained hardened material, it is preferable that it have aromatic rings, and in applications where the coloring of the hardened material is an issue, it is preferable that it have an aliphatic cyclic structure. Furthermore, when emphasis is placed on the flexibility of the hardened material, it is also possible to select alkylene chains and oxyalkylene chains. With respect to the linear (meth)acryloyl-containing compound of the present invention, it is acceptable to multiply connect the same substance as **A** of the aforementioned general formula (1), and it is also acceptable to connect substances of different structure - appropriate selection for use may be made according to target application, performance level of the obtained hardened material, and so on.

As A of the aforementioned general formula (1), it is possible to use a variety of substances, and there are no particular limitations. For example, one may cite the substance expressed by the following structural formula.

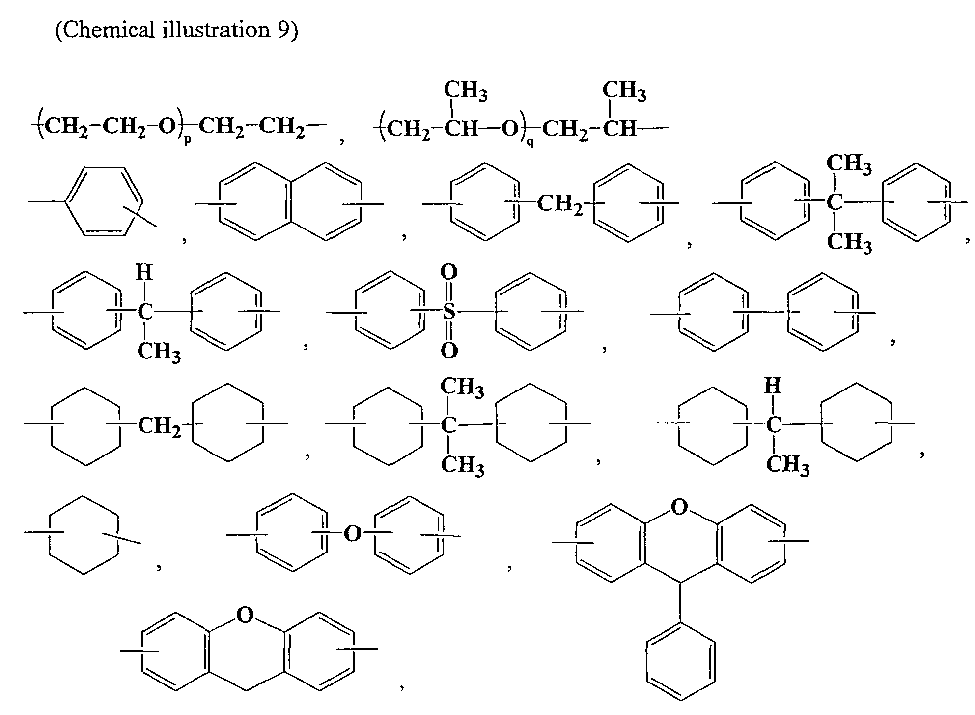

(In the formula, **p** and **q** are integers of 1 to 6. Provided that it is also acceptable to have alkyl groups with a carbon number of 1 to 4 as substituents on the ring.)

Among these, when conducting synthesis by the below-described manufacturing method of the present invention, a residue excluding 2 hydroxyl groups from bisphenol or biphenol is preferable due to the ease of industrial procurement of the epoxy resin which is a raw material, and due to the satisfactory mechanical and physical properties of the obtained hardened material, and groups having a xanthene skeleton are particularly preferable due to the excellent heat resistance and flame retardancy of the hardened material.

As **R** of the aforementioned general formulas (3) and (4), hydrogen atoms are preferable from the standpoint of satisfactory hardenability by active energy rays. However, as methyl groups are preferable as R of the aforementioned general formulas (3) and (4) when emphasis is placed on the heat resistance of hardened material, and as use of a thermohardening system is preferable in such instances, it is better to make the selection according to the target application and the type of hardening system that is employed.

The molecular ends of the linear (meth)acryloyl-containing compound of the present invention are epoxy groups or groups expressed by the aforementioned general formula (4). Both ends of the molecule may be epoxy groups, one end only may be an epoxy group, or both ends may have a structure expressed by the aforementioned general formula (4). The epoxy groups or the groups expressed by the aforementioned general formula (4) which are the molecular ends are not directly bonded with the aforementioned general formula (2) or (3), but are bonded to the aforementioned general formula (1). When the molecular ends are epoxy groups, there are functional groups in the individual molecule which have different types of reactivity such as (meth)acryloyl groups and epoxy groups, and one may apply not only active-energy-ray hardening systems, radical polymerization systems, and thermohardening systems, but also cationic hardening systems, and hardening systems or the like which employ hardening reaction with a compound having functional groups capable of reacting with epoxy groups such as amino groups. Thus, a variety of choices are possible according to the target application, performance level of hardened material, hardening apparatus, form of hardened material, and so on.

As **B** of the aforementioned general formula (4) which illustrates a molecular end, there are no particular limitations so long as it is a monovalent hydrocarbon radical. For example, one may cite the substance expressed by the following structural formula.

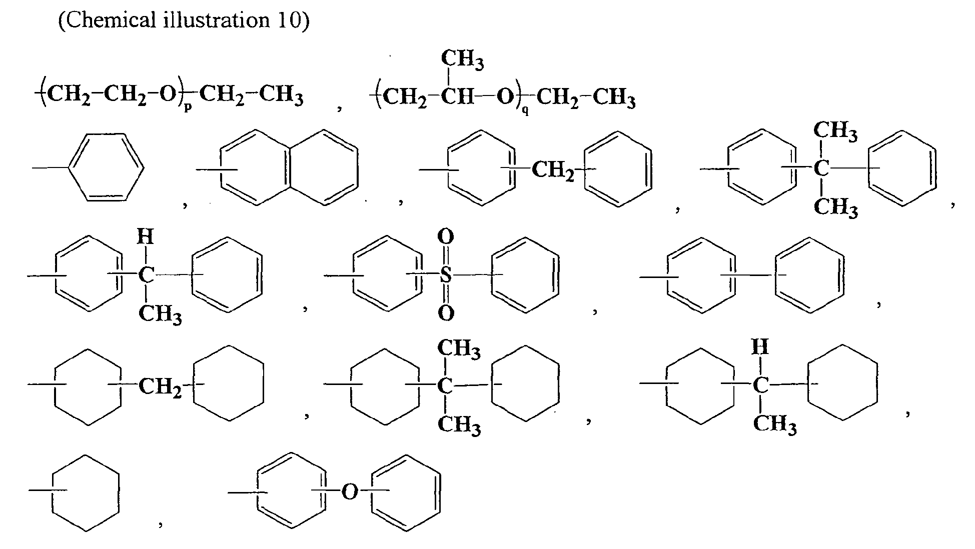

(In the formula, **p** and **q** are integers of 1 to 6. Provided that it is also acceptable to have alkyl groups with a carbon number of 1 to 4 as substituents in the ring.)

Among these, a structure having aromatic rings is preferable due to the excellent heat resistance and corrosion resistance of the obtained hardened material.

The star (meth)acryloyl-containing compound which is the second aspect of the present invention is expressed by the following general formula (5)

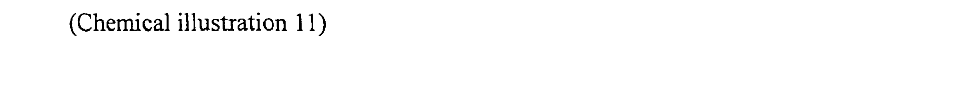

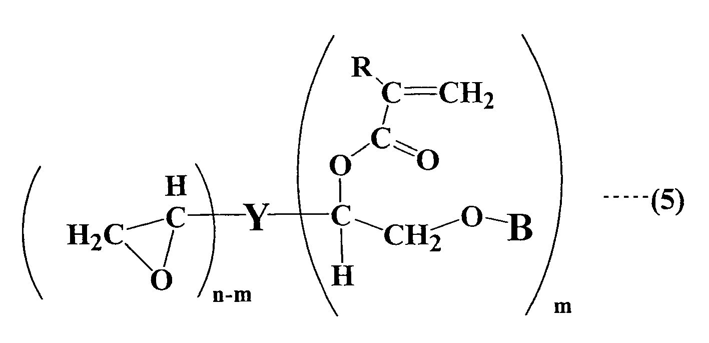

(in Formula (5), **R** is a hydrogen atom or a methyl group, **B** is a monovalent hydrocarbon radical, **Y** is a residue obtained by excluding epoxy groups from multifunctional epoxy resin having an average of **n** epoxy groups (provided that n is 3 or more), and **m** is an integer of 3 or more (provided that **n** ≥ **m**)), and its number average molecular weight is 800-10,000.

From the standpoint of satisfactory hardenability, it is indispensable to have an average of 3 or more (meth)acryloyl groups contained in a single molecule of the aforementioned star (meth)acryloyl-containing compound. Accordingly, when the employed epoxy resin is trifunctional, it is a compound which does not have any epoxy groups in an individual molecule.

As a result of having a structure expressed by the aforementioned general formula (5), compared with multifunctional epoxy (meth)acrylate obtained using novolac epoxy resin as raw material, it facilitates creation of a regular crosslinked structure, which is attributable to having one (meth)acryloyl group in a single side chain extending from the central part of the star. In addition, molecular weight per (meth)acryloyl group can be prepared to order by selecting the structure of **Y** and **B** in the aforementioned general formula (5), thereby enabling the hardened material to be simultaneously endowed with the hardness and toughness which could not be achieved solely by multifunctional epoxy (meth)acrylate obtained from novolac epoxy resin. Moreover, it is possible to obtain a substance that does not have any hydroxyl groups in the structure, enabling use as material for precise electrical applications and the like. Accordingly, as with the above-described linear (meth)acryloyl-containing compound, it can be used without conducting troublesome studies pertaining to selection and blending of other acrylic monomers to be used in combination in order to prepare the performance balance of the hardened material, thereby opening up a wide range of industrial applications.

It is indispensable that the number average molecular weight of the star (meth)acryloyl-containing compound of the present invention be 800-10,000. It is unsuitable when the pertinent molecular weight is less than 800, as the heat resistance, corrosion resistance and mechanical strength of the obtained hardened material are insufficient; and it is unsuitable when in excess of 10,000, as industrial procurement of the epoxy resin which is a raw material when conducting manufacture by the below-described manufacturing method of the present invention is difficult, and furthermore the softening point becomes excessively high, compatibility cannot be maintained with the alkyl ester (meth)acrylate which is another raw material, and ester exchange reaction is inhibited. A particularly preferable number average molecular weight is 1,500-5,000. The number average molecular weight is obtained by the same method used for the aforementioned linear (meth)acryloyl-containing compound.

As Y in the aforementioned general formula (5), one may cite, for example, the substance expressed by the following structural formula.

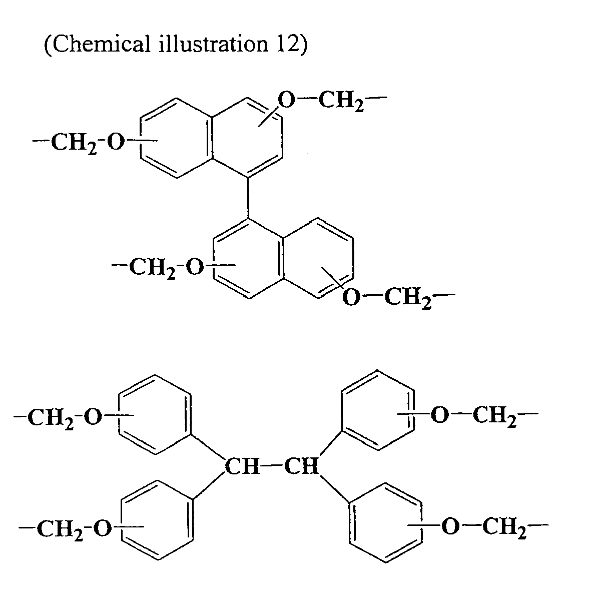

(Provided that it is also acceptable to have alkyl groups with a carbon number of 1 to 4 as substituents in the ring.)

Thus, in the case where there are aromatic rings in the central portion of the star structure, it is also possible to impart intermolecular π-π stacking capability, thereby enabling further enhancement of such properties as heat resistance, corrosion resistance and mechanical strength with respect to the hardened material.

As **R** of the aforementioned general formula (5), hydrogen atoms are preferable from the standpoint of satisfactory hardenability by active energy rays. However, as methyl groups are preferable as **R** of the aforementioned general formula (5) when emphasis is placed on the heat resistance of the hardened material, and as use of a thermohardening system is preferable in such instances, it is better to make the selection according to the target application and the type of hardening system that is employed.

As **B** of the aforementioned general formula (5), there are no particular limitations so long as it is a monovalent hydrocarbon radical, and one may cite, for example, the substance expressed by the following structural formula.

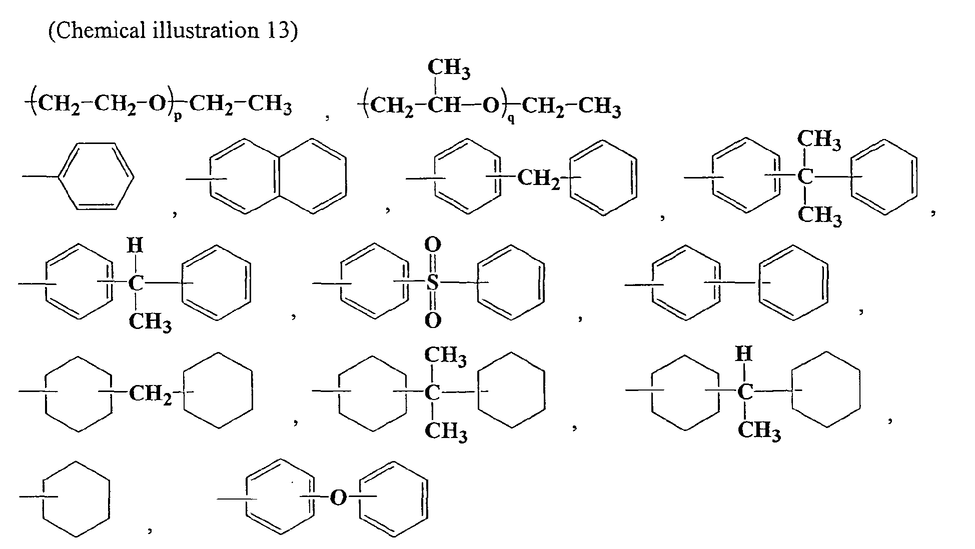

(In the formula, **p** and **q** are integers of 1 to 6. Provided that it is also acceptable to have alkyl groups with a carbon number of 1 to 4 as substituents in the ring.)

Among these, a structure which has aromatic rings is preferable from the standpoint of excellent heat resistance and corrosion resistance of the obtained hardened material.

The manufacturing method for (meth)acryloyl-containing compounds of the present invention uses epoxy resin (I) having 3 or more of the structural units expressed by the following structural formula (6)

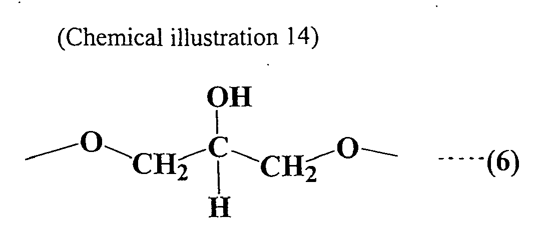

in a single molecule, and alkyl ester (meth)acrylate (II), and obtains a compound having on average 3 or more (meth)acryloyl groups in a single molecule by conducting an ester exchange reaction in the presence of a polystannoxane catalyst (III) to introduce (meth)acryloyl groups at the hydroxyl group in the aforementioned general formula (6).

Heretofore, it has been well known that (meth)acryloyl groups can be introduced into hydroxyl groups by subjecting alkyl ester (meth)acrylate and a compound having hydroxyl groups to ester exchange reaction. However, the hydroxyl groups where introduction is to be conducted in the present invention exist at peculiar sites. That is, as the carbon atoms to which the pertinent hydroxyl groups are bonded are themselves bonded to 2 oxygen atoms having a free electron pair via a methylene group, one may easily infer that there is a high electron density at the periphery of the pertinent hydroxyl groups. This shows that the hydrogen atoms in the pertinent hydroxyl groups have a positive charge, and are difficult to eliminate. It has heretofore been known that the secondary hydroxyl groups in epoxy resin have very poor reactivity. That is, numerous secondary hydroxyl groups exist in linear epoxy resin, but increases in the epoxy equivalent during preservation by reaction of the pertinent hydroxyl groups with epoxy groups at the terminal ends is ordinarily not observed. For example, one may infer the lowness of reactivity from the fact that reaction of hydroxyl groups and isocyanate groups generally proceeds even at room temperature, but thermohardening is required with the combination of an epoxy resin and an isocyanate compound.

Furthermore, in the case where the oxygen atoms of the main chain of the aforementioned general formula (6) are bonded to an aromatic ring, carbon atoms to which hydroxyl groups are bonded exist in the deep trough part between the electron clouds formed by the connected aromatic ring, with the result that attacks from the outside are impeded, and the reactivity of the hydroxyl groups is further lowered. Consequently, it is generally thought to be very difficult to apply the reaction achieved by hydroxyl groups in common hydroxyl-containing compounds to hydroxyl groups in epoxy resin. There have been no attempts whatsoever to undertake the introduction of (meth)acryloyl groups which have particularly high reactivity into the hydroxyl groups of epoxy resin with hardly any occurrence of side reaction, nor to undertake the introduction of (meth)acryloyl groups into hydroxyl groups of low reactivity while having epoxy groups of extremely high reactivity remain unchanged in the epoxy resin.

As the epoxy resin (I) used in the present invention, it is sufficient if 3 or more of the aforementioned structural formula (6) exist in a single molecule. Commercially available products are acceptable, as are substances obtained by further subjecting commercially available products to elongation reaction with a dihydroxy compound or the like. It is also acceptable to use denatured epoxy resin wherein the epoxy groups of these epoxy resins are subjected to ring opening with use of a hydroxy compound.

As epoxy resin which can be used from commercially available products, and which produce a linear (meth)acryloyl-containing compound, one may cite, for example, bisphenol epoxy resins such as bisphenol A epoxy resin, bisphenol F epoxy resin, bisphenol S epoxy resin, bisphenol ACP epoxy resin, and bisphenol AD epoxy resin, as well as biphenol epoxy resin, hydrogenated bisphenol A epoxy resin, and so on, which have a structure expressed by the aforementioned structural formula (6) of which there are 3 or more in a single molecule.

Moreover, as epoxy resin which can be used as raw material to yield a linear (meth)acryloyl-containing compound in the case where the method is used which conducts the below-described elongation reaction with a dihydroxy compound or the like, and which causes 3 or more of the structure expressed by the aforementioned structural formula (6) to be contained in a single molecule, in addition to the aforementioned epoxy resins, one may further cite, for example, diglycidyl ethers having an alkylene chain such as neopentyl glycol diglycidyl ether, 1,4-butanediol diglycidyl ether, polyethylene glycol diglycidyl ether, and polypropylene glycol diglycidyl ether; and epoxy resins having a xanthene skeleton such as diglycidyl ethers of the unsubstituted xanthene type such as 2,7-diglycidyl oxyxanthene and 3,6-diglycidyl oxyxanthene; diglycidyl ethers of the substituted xanthene type such as 3,6-diglycidyloxy-9,9-dimethylxanthene and 2,7-diglycidyloxy-1,3,4,5,6,8-hexamethyl- 9-phenylxanthene; and diglycidyl ethers of the dibenzoxanthene type such as 2,11-diglycidyloxy-13-biphenyl dibenzoxanthene. These may be used alone, or in combinations of two or more.

Among these, it is preferable to use bisphenol epoxy resin from the standpoints of ease of industrial procurement and excellence of the mechanical and physical properties of the obtained hardened material, while use of epoxy resins having a xanthene skeleton is preferable from the standpoint of obtaining hardened material that also has excellent flame retardancy in addition to heat resistance.

There are no particular limitations on the dihydroxy compounds which can be used when conducting the aforementioned elongation reaction, and one may cite, for example, bivalent phenols such as resorcin, hydroquinone, and catechol which may have substituents; bisphenols such as bisphenol A, bisphenol F, bisphenol AD, and tetrabromobisphenol A; biphenols such as biphenol and tetramethylbiphenol; bivalent alcohols such as 1,4-butanediol, ethylene glycol, propylene glycol, polyethylene glycol, and polypropylene glycol; dihydroxy compounds of the unsubstituted xanthene type such as 2,7-dihydroxyxanthene and 3,6-dihydroxyxanthene; dihydroxy compounds of the substituted xanthene type such as 3,6-dihydroxy-9,9-dimethylxanthene and 2,7-dihydroxy-1,3,4,5,6,8- hexamethyl-9-phenylxanthene; dibenzoxanthene dihydroxy compounds such as 2,11-dihydroxy-13-biphenyldibenzoxanthene; as well as dihydroxynaphthalene, dihydroxyanthracene, and so on. These may be used alone, or in combinations of two or more.

The aforementioned epoxy resins which are commercially available and the epoxy resins which are obtained by conducting elongation reaction have epoxy groups at the ends. After turning them into denatured epoxy resin in which a portion or the entirety of these epoxy groups have further undergone ring-opening with use of a hydroxy compound, it is acceptable to use them as raw material of the below-described ester exchange reaction. In the case where epoxy groups do not exist, as the mechanical strength and the like of the obtained hardened material are excellent even though one cannot use a cationic hardening system when obtaining the hardened material, it is preferable to make appropriate selection for use according to the application and the physical properties of the hardened material.

There are no particular limitations on the hydroxy compound which may be used in this instance, and one may cite, for example, monovalent phenols such as phenol, butylphenol, nonylphenol, phenylphenol, and cumylphenol; monovalent alcohols such as ethyl alcohol and cyclohexyl alcohol; as well as hydroxynaphthelene, hydroxyanthracene, and so on. These may be used alone, or in combinations of two or more. Among these, from the standpoint of excellent heat resistance and corrosion resistance of the obtained hardened material, it is preferable to use compounds having aromatic rings.

The star (meth)acryloyl-containing compound may be obtained by a method which uses, for example, naphthalene quadrifunctional epoxy resin or tetrakis phenolethane epoxy resin or the like as raw material, and which causes reaction of an aforementioned hydroxy compound with terminal epoxy groups, subjects the pertinent epoxy groups to ring opening to produce a compound having 3 or more secondary hydroxyl groups, and subsequently conducts the below-described ester exchange reaction. Commercially available tetrakis phenolethane epoxy resins also include resins in which 2 or more molecules are connected. At time of use, these may be employed as raw material of the present invention after extracting the monomers with a column or the like, and it may also be possible to use commercially available products as is according to the target performance, etc.

By adjusting the reaction ratio of the aforementioned hydroxy compound relative to the terminal epoxy groups, it also becomes possible to adjust the number of epoxy groups and (meth)acryloyl groups in the obtained compound. The ability to introduce two types of functional groups with different reactivity into a single molecule in the proportion of one's choice also demonstrates the high degree of industrial usefulness of the manufacturing method of the present invention.

There are no particular limitations on the method by which elongation reaction is conducted relative to a commercially available epoxy resin using a dihydroxy compound, or the method by which epoxy groups are subjected to ring opening using a hydroxy compound, and a variety of methods may be used. For example, one may cite the method of stirring and heating at 120-220°C in the presence of a catalyst. There are no particular limitations on the aforementioned catalyst, and one may cite, for example, onium salt, phosphines, alkali metal hydroxide, and so on. As to the proportions of use of the epoxy resin and the dihydroxy compound or hydroxy compound, it is preferable to make an appropriate selection according to the molecular weight of the epoxy equivalent or denatured epoxy equivalent of the subject epoxy resin, the quantity of the (meth)acryloyl groups to be introduced, etc.

There are no particular limitations on the alkyl ester (meth)acrylate (II) used in the ester exchange reaction, but ester having alkyl groups with carbon numbers of 1-6 is preferable from the standpoint of satisfactory reactivity. For example, one may cite methyl acrylate, ethyl acrylate, propyl acrylate, methyl methacrylate, ethyl methacrylate, propyl methacrylate, and so on. Use of alkyl ester acrylate is preferable from the standpoint of the hardenability of the obtained (meth)acryloyl-containing compound, while alkyl ester methacrylate is preferable in applications which emphasize the heat resistance and the like of the hardened material. Thus, it is preferable to make an appropriate selection according to the method of use and application of the obtained compound. The manufacturing process of the present invention has the characteristic that even when these alkyl ester (meth)acrylates (II) are used, polymerization of the pertinent (meth)acryloyl groups hardly ever arises during the ester exchange reaction, nor is there any occurrence of higher molecular weight (gelling).

As the polystannoxane catalyst (III) which is the ester exchange catalyst used in the present invention, the catalyst expressed by the following general formula (7)

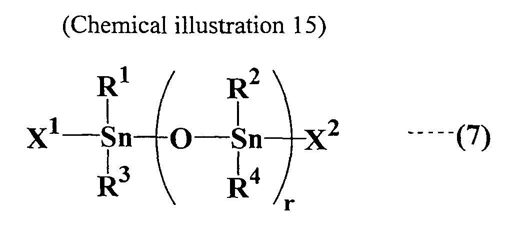

(In formula (7), R¹-R⁴ are respectively independent methyl groups or ethyl groups; X¹ and X² are respectively independent electron attractive groups having lone-pair electrons on atoms which bond with stannic atoms; and r is an integer of 1 to 8.)
manifests excellent catalytic activity, and is preferable from the standpoint of high yield in ester exchange reaction.

As the electron attractive groups having lone-pair electrons on atoms which bond with stannic atoms pertaining to the aforementioned general formula (7), one may cite halogen atoms such as chlorine atoms, bromine atoms or fluorine atoms, acyloxy groups with a carbon number of 1 to 4, hydroxyl groups, thiole groups, thiocyan acid groups, and so on.

Among such polystannoxane catalysts shown in the aforementioned general formula (7), from the standpoint of satisfactory solubility in water during the extraction operations conducted during refinement after the ester exchange reaction, it is particularly preferable to use those where r of the aforementioned general formula (7) is 1 or 2. In addition, from the same standpoint of excellent solubility in water, it is preferable that R¹-R⁴ be methyl groups.

Furthermore, from the standpoint of excellent catalytic activity, it is preferable that X¹ and X² in the aforementioned general formula (7) be halogen atoms, acyloxy groups, thiocyan acid groups.

Accordingly, as the polystannoxane catalyst used in the present invention, it is preferable to employ a distannoxane compound (r = 1) or a tristannoxane compound (r = 2) in which R¹-R⁴ of the aforementioned general formula (7) are methyl groups, and X¹ and X² are halogen atoms, acyloxy groups or thiocyan acid groups.

As a distannoxane compound, one may cite, for example, Cl (CH₃)₂ SnOSn (CH₃)₂ Cl, Cl (CH₃)₂ SnOSn (CH₃)₂ OCOCH₃, Cl (CH₃)₂ SnOSn (CH₃)₂ OCH₃, CH₃ OCO (CH₃)₂ SnOSn, (CH₃)₂ OCOCH₃, Cl (CH₃)₂ SnOSn (CH₃)₂ OCOCH₂ CH₃ Cl (CH₃)₂ SnOSn (CH₃)₂ SCN, NCS (CH₃)₂ SnOSn (CH₃)₂ SCN, and so on. As a tristannoxane compound, one may cite Cl (Sn(CH₃)₂O)₂ Sn (CH₃)₂ Cl, Cl (Sn(CH₃)₂O)₂ Sn (CH₃)₂ OCOCH₃, Cl (Sn(CH₃)₂O)₂ Sn (CH₃)₂ OCH₃, CH₃ OCO (Sn(CH₃)₂O)₂ Sn (CH₃)₂ OCOCH₃, Cl (Sn(CH₃)₂O)₂ Sn (CH₃)₂ OCOCH₂ CH₃ Cl (Sn(CH₃)₂O)₂ Sn (CH₃)₂ SCN, NCS (Sn(CH₃)₂O)₂ Sn (CH₃)₂ SCN, and so on.

Moreover, a tristannoxane compound is preferable not only because it has satisfactory stability in water, and is not easily hydrolyzed in water, but also because it enables reduction in the amount of residual organic stannic compound in the product.

At the time of the ester exchange reaction of the present invention, it is also possible to introduce a stannic compound illustrated by the following general formula (8)

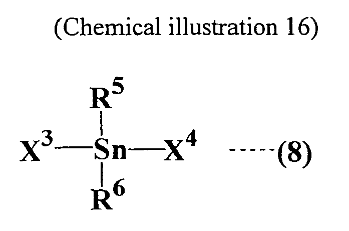

(In formula (8), **R⁵** and **R⁶** are respectively independent methyl groups or ethyl groups, and **X³** and **X⁴** are respectively independent electron attractive groups having lone-pair electrons on atoms which bond with stannic atoms.)
and an alkaline compound into the reaction system, form a polystannoxane catalyst (III) within the system, and conduct the ester exchange reaction. In this case, as the alkaline compound and epoxy groups would react if epoxy groups exist in the employed epoxy resin (I), as stated above, it is preferable to use denatured epoxy resin in which the epoxy groups have been subjected to ring opening in advance by a hydroxy compound.

As stannic compounds shown by the aforementioned general formula (8), it is preferable to use, for example, the compounds expressed by Cl₂Sn (CH₃)₂, BR₂Sn (CH₃)₂, I₂Sn (CH₃)₂, ClSn (CH₃)₂ OH, ClSn (CH₃)₂ SH, Cl₂ Sn (C₂H₅)₂, Cl (CH₃OCO) Sn (CH₃)₂, Cl (CH₃CH₃OCO) Sn (CH₃)₂, and Cl (NCS) Sn (CH₃)₂. As alkaline compounds, one may cite hydroxides of alkali metal or alkali earth metal such as sodium hydroxide, potassium hydroxide, and calcium hydroxide; alkoxides of alkali metal or alkali earth metal such as sodium methoxide, potassium methoxide, and calcium methoxide; and carbonates such as sodium carbonate and calcium carbonate.

With respect to the manufacturing method of the present invention, as the proportion in which to use the aforementioned tristannoxane catalyst (III), a range of 0.01-10 mass percent relative to the mass of the epoxy resin (I) which is normally used as raw material is preferable, and a range of 0.1-2.0 mass percent is more preferable.

The ester exchange reaction which is the manufacturing method of the present invention may be conducted with or without the presence of solvents, but as an ester exchange reaction is a reversible reaction, it is desirable to remove any produced alcohol from the system.

As stated above, the ester exchange reaction which is the manufacturing method of the present invention has the characteristic that it does not easily produce higher molecular weights (gelling), but it is preferable to include a polymerization inhibitor in order to still further suppress the polymerization of (meth)acryloyl groups.

As the aforementioned polymerization inhibitor, one may cite, for example, benzoquinone, hydroquinone, catechol, diphenyl benzoquinone, hydroquinone monomethyl ether, naphtoquinone, t-butyl catechol, t-butyl phenol, dimethyl-t-butylphenol, t-butyl crezole, phenothiazine, and so on.

The amount of polymerization inhibitor to be used depends on the amount of reaction product and of raw material components, but it is normally preferable to have a range of 5-10000 ppm, and particularly of 20-7000 ppm on a mass basis relative to the (meth)acryloyl-containing compound which is the reaction product.

The aforementioned ester exchange reaction may be conducted at atmospheric pressure. Moreover, the reaction temperature conditions may be appropriately selected according to the employed raw material and reaction solvent, but 20-150°C is preferable. That is, there is dramatic improvement in the reaction speed of the ester exchange reaction at temperature conditions of 20°C or above, while side reactions can be inhibited at temperature conditions of 150°C or less. From the standpoint of inhibiting the polymerization of (meth)acryloyl groups, 70-120°C is preferable.

From the standpoint of enabling satisfactory inhibition of polymerization of (meth)acryloyl groups, it is preferable to use a method which conducts the ester exchange reaction in an oxygen-containing gas atmosphere, or while continuously introducing an oxygen-containing gas onto the reaction liquid surface or into the reaction liquid. In this instance, the oxygen-containing gas may be air, but a gas with an oxygen content of 5-13 volume percent, because as oxygen content increases on a volume basis, the risk of occurrence of inflammation and explosion rises, and coloration of the product tends to occur. Such a gas with an oxygen content of 5-13 volume percent may be adjusted by mixing, for example, air or oxygen and an inert gas in a proportion that fulfills the pertinent conditions. In this instance, as inert gas, one may cite nitrogen, argon, and so on.

As to the flow rate at which to conduct continuous introduction of an oxygen-containing gas onto the reaction liquid surface or into the reaction liquid, 0.1-30 mL/min. relative to 1 mol of alkyl ester (meth)acrylate (II) is preferable.

Moreover, when continuously introducing an oxygen-containing gas into the reaction liquid, it is preferable to conduct injection so to produce the tiniest possible bubbles in the reaction liquid, because this increases the efficiency of polymerization prevention.

Moreover, with respect to the ester exchange reaction, there are no particular limitations on the proportions of use of the epoxy resin (I) and the alkyl ester (meth)acrylate (II), but when introducing (meth)acryloyl groups into all of the secondary hydroxyl groups in the epoxy resin, it is preferable that the molar ratio relative to the secondary hydroxyl groups of the alkyl ester (meth)acrylate (II) be ordinarily at 1 or more, and a range of 1.1-100 (molar ratio) is particularly preferable. By adjusting the amount of alkyl ester (meth)acrylate (II) used at this time, it is also possible to control the amount of (meth)acryloyl groups which are introduced.

Specifically, the ester exchange reaction of the present invention may be conducted by the following method. That is, one may cite the method wherein, first, the prescribed amounts of epoxy resin (I) and alkyl ester (meth)acrylate (II) are introduced into a reaction vessel provided with a thermometer, agitator, fractionating column, and dry-air induction tube, after which appropriate amounts of a polystannoxane catalyst (III) and a polymerization inhibitor are added to the reaction mixture, and heating is conducted until the normal reflux temperature of the reaction system within the aforementioned appropriate temperature range while agitating the reaction mixture. In this instance, in order to complete the reaction while agitating the reaction mixture, it is desirable to use the fractionating column to remove alcohol produced by ester exchange reaction during the reaction as an azeotrope of excess alkyl ester (meth)acrylate (II) or reaction solvent.

In addition, from the standpoint of polymerization prevention, it is preferable to conduct the reaction while adding the aforementioned alkyl ester (meth)acrylate (II) into the system.

After termination of the reaction, the pertinent reaction liquid may be provided for water extraction as crude reaction product which is the next manufacturing stage, or the excess raw material of alkyl ester (meth)acrylate (II) or reaction solvent may be distilled out of the reaction vessel, after which the residue may be treated as crude reaction product. Or the excess raw material of alkyl ester (meth)acrylate (II) or reaction solvent may be distilled out of the reaction vessel, after which a small amount of inactive solvent - for example, toluene or heptane - may be added to produce the crude reaction product.

The target compound may be obtained by extracting the crude reaction product obtained in the aforementioned manner from water, taking out the organic layer, and isolating the (meth)acryloyl-containing compound which is the product from the pertinent organic layer. As to the isolation method, the method of distilling out the organic solvent is preferable. When doing so, in order to prevent polymerization reaction, it is ordinarily preferable to conduct the operation under reduced pressure with addition of a polymerization inhibitor. In such instances, it is preferable to conduct the operation in the aforementioned inert gas atmosphere with an oxygen content of 5-13 volume percent.

With respect to the polymerization inhibitor used here, any of the aforementioned ones may be used, but methoquinone is particularly preferable from the standpoint of lack of coloration from denaturation. Its dosage depends on the type of obtained (meth)acryloyl-containing compound, but is ordinarily 5-5000 ppm on a mass basis relative to the solution constituting the organic layer, and 50-2500 ppm is preferable.

As described above, according to the manufacturing method of the invention of the present patent application, (meth)acryloyl groups can be efficiently and easily introduced into the hydroxyl groups of epoxy resin having secondary hydroxyl groups. In such cases, when epoxy resin having epoxy groups is used as raw material, it is possible to obtain a compound having epoxy groups and (meth)acryloyl groups by a single-stage reaction, which is very useful for industrial applications.

### WORKING EXAMPLES

Below, the present invention is described in further detail by means of working examples, However, the present invention is not limited by any of the following working examples, and, for example, it is acceptable to suitably combine the constituent elements of these working examples. Unless otherwise specified, "%" signifies "mass %."

### Synthesis example 1 (synthesis of a tristannoxane compound as a catalyst)

16.48 g (75 mmol) of dimethyl tin dichloride, 120 ml of water, and 45 ml of ethanol were introduced into a reaction vessel provided with an agitator, thermometer and dropping funnel, and agitation was conducted to obtain uniform dissolution. Next, instillation of 10.1 g (100 mmol) of triethyl amine was conducted from the dropping funnel during agitation. During this time, the reaction vessel was put into an ice bath, and maintained so that its internal contents were around 20°C. After termination of instillation, reaction was conducted by further agitation for 3 hours at the same temperature. After termination of reaction, the white precipitate was filtered, and washed with 100 ml of water and then 200 ml of ethanol, after which it was subjected to reduced-pressure drying at 105°C to obtain 12.6 g of white powder. As a result of element analysis (using Vario EL manufactured by Elementar Co.), tin was 64.9% and chlorine 13.0%, which accorded within the measurement deviation range (0.3%) with the theoretical values (64.8% tin, 12.9% chlorine) of hexamethyl-1.5-dichlorotristannoxane expressed by the following structural formula.

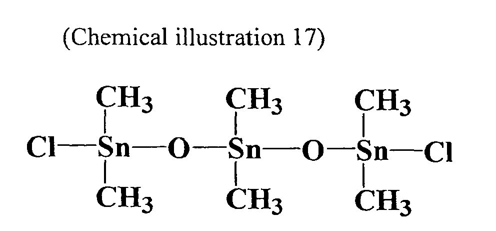

### Working Example 1 Ester exchange reaction of bisphenol A epoxy resin (synthesis of acrylate)

10.0 g of EPICLON AM-040-P bisphenol A epoxy resin (manufactured by Dainippon Ink & Chemicals Co.; number average molecular weight Mn = 2000; polystyrene equivalence by GPC), 120.0 g of ethyl acrylate, 0.6 g of the tristannoxane compound obtained by the aforementioned synthesis example as a catalyst, and 1.2 g of p-methoxyphenol as a polymerization inhibitor were inserted into a reaction flask provided with an agitator, air induction tube, thermometer and fractionating column, and reaction was commenced while introducing air. The reaction was conducted for 24 hours while the ethanol produced at a reaction temperature of 95-98°C underwent reflux removal as a liquid mixture with ethyl acrylate.

After termination of reaction, excess ethyl acrylate was removed by reduced-pressure distillation, and a small amount of toluene was added to the residue, after which reduced-pressure distillation was further conducted to remove excess ethyl acrylate.

The reaction mixture remaining from the reduced-pressure distillation was added to a 300 ml methanol solution, and the white solid that was produced was separated out. After dissolving the white solid in a small amount of chloroform, it was again added to a 300 ml methanol solution, and the reprecipitated white solid was separated out. Next, it was subjected to reduced-pressure drying at 40°C, thereby obtaining 11.6 g of a linear acryloyl-containing compound having the subject bisphenol A as the main skeleton, expressed by the following structural formula.

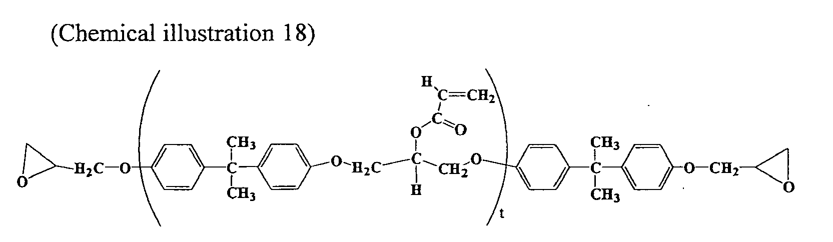

As a result of conducting ¹H-NMR (AL300 manufactured by Japan Electron Optics Laboratory Co., Ltd., 300 MHz, solvent CDCl₃) measurement with respect to the obtained compound, by comparing the integral ratios of 6.80-7.18 ppm aromatic hydrogen, 5.83-6.44 ppm acryloyl-group hydrogen, and 2.74, 2.90 and 3.33 ppm epoxy-group hydrogen pertaining to the epoxy resin raw material and the product before and after the ester exchange reaction, it was found that the rate of introduction of acryloyl groups into the secondary hydroxyl groups of epoxy resin was 99 mol % or higher, and that the survival rate of terminal epoxy groups was approximately 90 mol%. The average value of *t* which is the number of cycles in the aforementioned structural formula was approximately 5.7, the number average molecular weight of the obtained compound was 2300, and the quantity of acryloyl groups per molecule was 5.7.

### Working Example 2 Ester exchange reaction of bisphenol A epoxy resin (synthesis of methacrylate)

A linear methacryloyl-containing compound having the subject bisphenol A as the main skeleton and expressed by the following structural formula

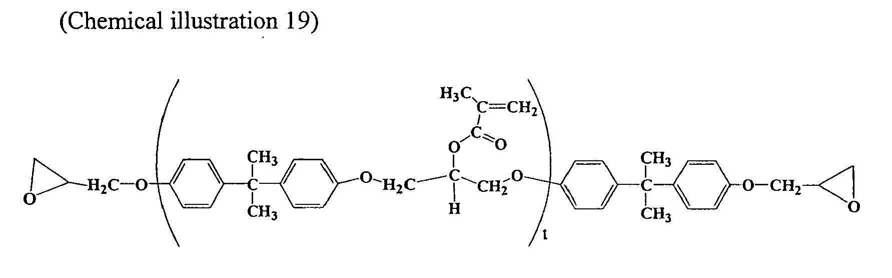

was obtained in the same manner as Working Example 1, except that the 120.0 g of ethyl acrylate used in Working Example 1 was replaced by 135.0 g of methyl methacrylate, and reflux removal was conducted with a liquid mixture of ethanol and ethyl methacrylate produced at a reaction temperature of 100-110°C.

As a result of conducting ¹H-NMR measurement with respect to the obtained compound in the same manner as Working Example 1, by comparing the integral ratios pertaining to the epoxy resin raw material and the product before and after the ester exchange reaction, it was found that the rate of introduction of methacryloyl groups into the secondary hydroxyl groups of epoxy resin was 99 mol % or higher, and that the survival rate of terminal epoxy groups was approximately 87 mol%. The average value of *t* which is the number of cycles in the aforementioned structural formula was approximately 5.7, the number average molecular weight of the obtained compound was 2380, and the quantity of methacryloyl groups per molecule was 5.7.

### Working Example 3

### (3-1) Synthesis 1 of xanthene-biphenylene copolymer type epoxy resin

15.55 g of a xanthene skeleton-containing epoxy resin synthesized according to working examples 3 and 4 of Japanese Unexamined Patent Application, First Publication No. 2003-201333, 2.38 g (8 mmol) of 4,4'-diglycidyl oxybiphenyl, 6.0 g (32 mmol) of 4,4'-dihydroxy biphenyl, and 0.106 g (0.2 mmol) of a 70% methanol solution of ethyltriphenyl phosphonium acetate were agitated and heated to 130°C in 24.63 g of N,N-dimethyl acetoamide under a nitrogen atmosphere, and reacted for 4 hours. After being left to cool, the light-yellow transparent semisolid reaction liquid was diluted with 114.95 g of N,N-dimethyl acetoamide, and dripped onto ice. The deposited white and clumpy precipitate was subjected to suction filtration, and washed with ice water, after which the clumpy precipitate was boiled for 30 minutes in 2 L of water while being vigorously agitated. After being left to cool, the solid material obtained by decantation was pulverized, and made into powder. After further washing with methanol, it was subjected to reduced-pressure drying at 60°C to obtain xanthene-biphenylene copolymer type epoxy resin. The amount of the obtained xanthene-biphenylene copolymer type epoxy resin was 23.3 g, and the yield was 95%.

### (3-2) Ester exchange reaction of xanthene-biphenylene copolymer type epoxy resin

A linear acryloyl-containing compound having the subject xanthene-biphenylene copolymer type epoxy resin as the main skeleton, into which acryloyl groups were introduced, and expressed by the following structural formula

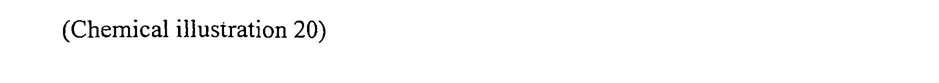

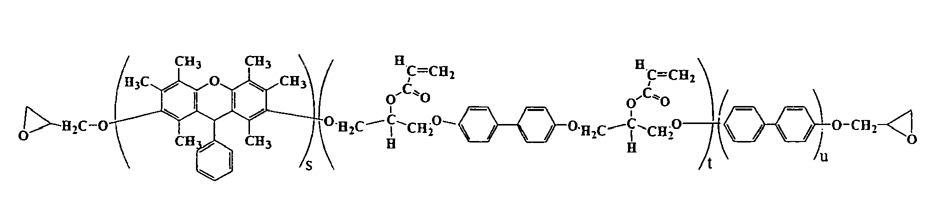

(Provided that the foregoing structural formula illustrates that the xanthene skeleton and the biphenyl skeleton are connected by a structural unit having acryloyl groups, and that the two ends of the pertinent structural unit may be connected to the same skeleton. The glycidyloxy groups at the molecular ends are connected to either a xanthene skeleton or a biphenyl skeleton, and both ends may be identical, or they may be different. As the xanthene skeleton-containing epoxy resin used as raw material has a cycle unit, there are also parts where mated xanthene skeletons are connected by epichlorohydrin residue, and acryloyl groups are also introduced at the secondary hydroxyl groups of the pertinent epichlorohydrin residue parts, but such parts are omitted from this structural formula.) was obtained by conducting ester exchange reaction in the same manner as Working Example 1, except that 14.0 g of xanthene-biphenylene copolymer type epoxy resin obtained in the aforementioned manner was used instead of the 10.0 g of EPICLON AM-040-P of Working Example 1.

¹H-NMR measurement was conducted with respect to the obtained compound in the same manner as Working Example 1, and by comparing the integral ratios of aromatic hydrogen, acryloyl-group hydrogen and epoxy-group hydrogen pertaining to the epoxy resin raw material and the product before and after the ester exchange reaction, it was found that the rate of introduction of acryloyl groups into the secondary hydroxyl groups of the epoxy resin was 99 mol % or higher, and that the survival rate of terminal epoxy groups was approximately 87 mol%. The number average molecular weight of the obtained compound was 3400, and the quantity of acryloyl groups per molecule was 8.

### Working Example 4

### (4-1) Synthesis 2 of xanthene-biphenylene copolymer type epoxy resin

10.2 g of a xanthene skeleton-containing epoxy resin synthesized according to working examples 3 and 4 of Japanese Unexamined Patent Application, First Publication No. 2003-201333, 2.6 g (14 mmol) of 4,4'-dihydroxy biphenyl, 26.2 mg (0.1 mmol) of triphenyl phosphine, and 13.4 g of N,N-dimethyl acetoamide reacted for 6 hours at 130°C under a nitrogen atmosphere. After being left to cool, the reaction liquid was diluted to 15% non-volatile matter with N,N-dimethyl acetoamide, after which it was instilled into 1 L of water, and the obtained milky dispersion liquid was agitated for 1 hour at room temperature. After centrifugal separation, suction filtration was conducted, and the obtained precipitate was washed with methanol, after which it was subjected to reduced-pressure drying at 60°C to obtain xanthene-biphenylene copolymer type epoxy resin. The amount of the obtained xanthene-biphenylene copolymer type linear epoxy resin was 10.33 g, and the yield was 81%.

### (4-2) Ester exchange reaction of xanthene-biphenylene copolymer type epoxy resin

A linear acryloyl-containing compound having the subject xanthene-biphenylene copolymer type epoxy resin as the main skeleton, into which acryloyl groups were introduced, and expressed by the following structural formula

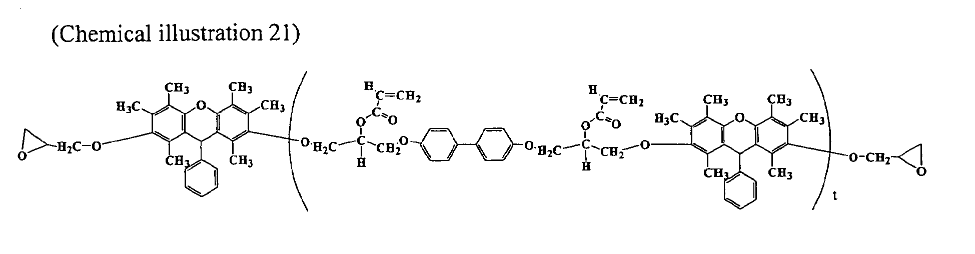

(Provided that, as the xanthene skeleton-containing epoxy resin used as raw material has a cycle unit, there are also parts where mated xanthene skeletons are connected by epichlorohydrin residue, and acryloyl groups are also introduced at the secondary hydroxyl groups of the pertinent epichlorohydrin residue parts, but such parts are omitted from this structural formula.)
was obtained by conducting ester exchange reaction of epoxy resin in the same manner as Working Example 1, except that 9.7 g of xanthene-biphenylene copolymer type epoxy resin synthesized in the aforementioned manner was used instead of the 10.0 g of EPICLON AM-040-P of Working Example 1.

¹H-NMR measurement was conducted with respect to the obtained compound in the same manner as Working Example 1, and by comparing the integral ratios of aromatic hydrogen and acryloyl-group hydrogen pertaining to the epoxy resin raw material and the product before and after the ester exchange reaction, it was found that the rate of introduction of acryloyl groups into the secondary hydroxyl groups of the epoxy resin was 99 mol % or higher. The number average molecular weight of the obtained compound was 2050, and the quantity of acryloyl groups per molecule was 4.

### Working Example 5

### (5-1) Synthesis of xanthene-bisphenol A copolymer type epoxy resin

A xanthene-bisphenol A copolymer type epoxy resin was obtained in the same manner as the synthesis of epoxy resin in Working Example 3-1, except that the 15.55 g of xanthene skeleton-containing epoxy resin synthesized according to working examples 3 and 4 of Japanese Unexamined Patent Application, First Publication No. 2003-201333, 2.38 g (8 mmol) of 4,4'-diglycidyl oxybiphenyl, and 6.0 g (32 mmol) of 4,4'-dihydroxy biphenyl in Working Example 3-1 were changed to 19.44 g of xanthene skeleton-containing epoxy resin, and 7.3 g (32 mmol) of bisphenol A. The amount of the obtained xanthene-bisphenol A copolymer type linear epoxy resin was 25.9 g, and the yield was 97%.

### (5-2) Ester exchange reaction of xanthene-bisphenol-A copolymer type epoxy resin

A linear acryloyl-containing compound having the subject xanthene-bisphenol-A copolymer type epoxy resin as the main skeleton, into which acryloyl groups were introduced, and expressed by the following structural formula

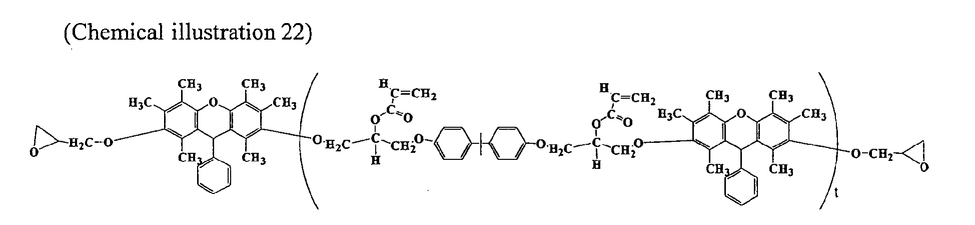

(Provided that, as the xanthene skeleton-containing epoxy resin used as raw material has a cycle unit, there are also parts where mated xanthene skeletons are connected by epichlorohydrin residue, and acryloyl groups are also introduced at the secondary hydroxyl groups of the pertinent epichlorohydrin residue parts, but such parts are omitted from this structural formula.)
was obtained by conducting ester exchange reaction of epoxy resin in the same manner as Working Example 1, except that 10.3 g of xanthene-bisphenol-A copolymer type epoxy resin synthesized in the aforementioned manner was used instead of the 10.0 g of EPICLON AM-040-P of Working Example 1.

¹H-NMR measurement was conducted with respect to the obtained compound in the same manner as Working Example 1, and by comparing the integral ratios of aromatic hydrogen and acryloyl-group hydrogen pertaining to the epoxy resin raw material and the product before and after the ester exchange reaction, it was found that the rate of introduction of acryloyl groups into the secondary hydroxyl groups of the epoxy resin was 99 mol % or higher, and that the survival rate of terminal hydroxy groups was approximately 85 mol%. The number average molecular weight of the obtained compound was 3750, and the quantity of acryloyl groups per molecule was 8.

### Working Example 6

### (6-1) Synthesis of xanthene-biphenylene-neopentylene copolymer type epoxy resin

A xanthene-biphenylene-neopentylene copolymer type epoxy resin was obtained in the same manner as the synthesis of epoxy resin in Working Example 3-1, except that the 2.38 g (8 mmol) of 4,4'-diglycidyl oxybiphenyl in Working Example 3-1 was changed to 1.73 g (8 mmol) of neopentylglycol diglycidyl ether. The amount of the obtained xanthene-biphenylene-neopentylene copolymer type epoxy resin was 22.8 g, and the yield was 95%.

### (6-2) Ester exchange reaction of xanthene-biphenylene-neopentylene copolymer type epoxy resin

A linear acryloyl-containing compound having the subject xanthene-biphenylene-neopentylene copolymer type epoxy resin as the main skeleton, into which acryloyl groups were introduced, and expressed by the following structural formula

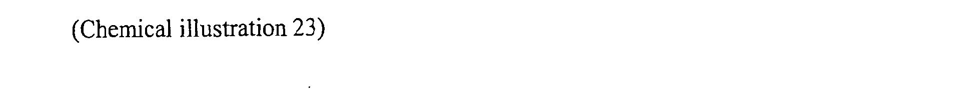

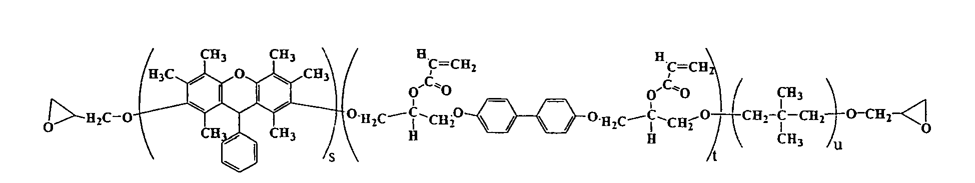

(Provided that the foregoing structural formula illustrates that the xanthene skeleton and the neopentylene skeleton are connected by a structural unit having acryloyl groups, and that the two ends of the pertinent structural unit may be connected to the same skeleton. The glycidyloxy groups at the molecular ends are connected to either a xanthene skeleton or a neopentylene skeleton, and both ends may be identical, or they may be different. As the xanthene skeleton-containing epoxy resin used as raw material has a cycle unit, there are also parts where mated xanthene skeletons are connected by epichlorohydrin residue, and acryloyl groups are also introduced at the secondary hydroxyl groups of the pertinent epichlorohydrin residue parts, but such parts are omitted from this structural formula.) was obtained by conducting ester exchange reaction of epoxy resin in the same manner as Working Example 1, except that 8.6 g of xanthene-biphenylene-neopentylene copolymer type epoxy resin synthesized in the aforementioned manner was used instead of the 10.0 g of EPICLON AM-040-P of Working Example 1.

¹H-NMR measurement was conducted with respect to the obtained compound in the same manner as Working Example 1, and by comparing the integral ratios of aromatic hydrogen, acryloyl-group hydrogen and epoxy-group hydrogen pertaining to the epoxy resin raw material and the product before and after the ester exchange reaction, it was found that the rate of introduction of acryloyl groups into the secondary hydroxyl groups of the epoxy resin was 99 mol % or higher, and that the survival rate of terminal epoxy groups was approximately 90 mol%. The number average molecular weight of the obtained compound was 3340, and the quantity of acryloyl groups per molecule was 8.

### Working Example 7

### (7-1) Synthesis of xanthene-biphenylene-hydrogenated bisphenol A copolymer type epoxy resin

A xanthene-biphenylene-hydrogenated bisphenol A copolymer type epoxy resin was obtained in the same manner as the synthesis of epoxy resin in Working Example 3-1, except that the 2.38 g (8 mmol) of 4,4'-diglycidyl oxybiphenyl in Working Example 3-1 was changed to 2.82 g (8 mmol) of hydrogenated bisphenol A (hereinafter "hydrogenated BPA") diglycidyl ether. The amount of the obtained xanthene-biphenylene-hydrogenated BPA copolymer type epoxy resin was 24.2 g, and the yield was 96%.

### (7-2) Ester exchange reaction of xanthene-biphenylene-hydrogenated bisphenol A copolymer type epoxy resin

A linear acryloyl-containing compound having the subject xanthene-biphenylene-hydrogenated BPA copolymer type epoxy resin as the main skeleton, into which acryloyl groups were introduced, and expressed by the following structural formula

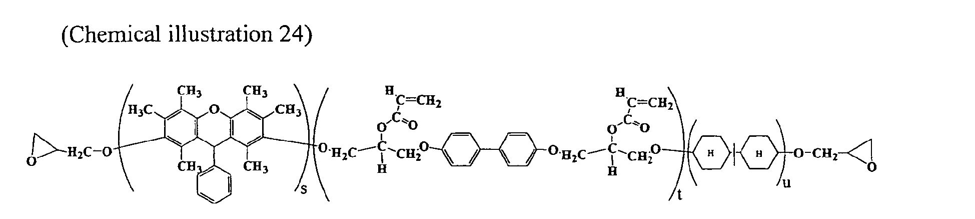

(Provided that the foregoing structural formula illustrates that the xanthene skeleton and the hydrogenated BPA skeleton are connected by a structural unit having acryloyl groups, and that the two ends of the pertinent structural unit may be connected to the same skeleton. The glycidyloxy groups at the molecular ends are connected to either a xanthene skeleton or a hydrogenated BPA skeleton, and both ends may be identical, or they may be different. As the xanthene skeleton-containing epoxy resin used as raw material has a cycle unit, there are also parts where mated xanthene skeletons are connected by epichlorohydrin residue, and acryloyl groups are also introduced at the secondary hydroxyl groups of the pertinent epichlorohydrin residue parts, but such parts are omitted from this structural formula.)
was obtained by conducting ester exchange reaction of epoxy resin in the same manner as Working Example 1, except that 9.8 g of xanthene-biphenylene-hydrogenated BPA copolymer type epoxy resin synthesized in the aforementioned manner was used instead of the 10.0 g of EPICLON AM-040-P of Working Example 1.

¹H-NMR measurement was conducted with respect to the obtained compound in the same manner as Working Example 1, and by comparing the integral ratios of aromatic hydrogen, acryloyl-group hydrogen and epoxy-group hydrogen pertaining to the epoxy resin raw material and the product before and after the ester exchange reaction, it was found that the rate of introduction of acryloyl groups into the secondary hydroxyl groups of the epoxy resin was 99 mol % or higher, and that the survival rate of terminal epoxy groups was approximately 89 mol%. The number average molecular weight of the obtained compound was 3450, and the quantity of acryloyl groups per molecule was 8.

### Working Example 8 Partial ring opening of epoxy groups

### (8-1) Synthesis of biphenylene-denatured bisphenol A epoxy resin

18.7 g (20 m equivalent) of EPICLON AM-040-P, 1.28 g (7.5 mmol) of 4-phenyl phenol, 0.26 ml (0.12 mol%) of a 65% ethyl triphenyl phosphonium ethanol acetate solution, and 50 ml of N,N-dimethyl acetoamide reacted for 6 hours at 120°C under a nitrogen atmosphere. After being left to cool, instillation into 150 ml of water was conducted, and the obtained precipitate was washed twice with methanol, after which it was subjected to reduced-pressure drying at 60°C to obtain biphenylene-denatured bisphenol A epoxy resin. ¹H-NMR measurement was conducted, and by comparing the integral ratios of aromatic hydrogen and methyl hydrogen of bisphenol A as well as epoxy-group hydrogen pertaining to the epoxy resin raw material and the product before and after reaction, it was found that the survival rate of terminal epoxy groups was approximately 54% [sic]. The amount of the obtained product was 19.9 g, and the yield was 100%.

The measurement results of ¹H-NMR (AL300 manufactured by Japan Electron Optics Laboratory Co., Ltd., 300 MHz) for the obtained bisphenol A-biphenylene denatured epoxy resin are shown below.
¹H-NMR (CDCl₃) measurement results:
δ (ppm): 7.55-6.75 (m), 4.40-3.90 (m), 3.33 (m), 2.89 (m), 2.73 (m), 1.62 (s)

### (8-2) Ester exchange reaction of biphenylene-denatured bisphenol A epoxy resin

12.0 g of biphenylene-denatured bisphenol A epoxy resin synthesized as described in (8-1) above, 120.0 g of ethyl acrylate, 0.6 g of the tristannoxane compound obtained in synthesis example 1 as a catalyst, and 1.2 g of p-methoxyphenol as a polymerization inhibitor were inserted into a reaction flask provided with an agitator, air induction tube, thermometer and fractionating column, and reaction was commenced while introducing air. The reaction was conducted for 24 hours while the ethanol produced using the fractionating column at a reaction temperature of 95-98°C underwent reflux as a liquid mixture with ethyl acrylate to remove the ethanol.

After termination of reaction, excess ethyl acrylate was removed by reduced-pressure distillation, and a small amount of toluene was added to the residue, after which reduced-pressure distillation was further conducted to remove excess ethyl acrylate.

The reaction mixture obtained by conducting the aforementioned reduced-pressure distillation was added to a 300 ml methanol solution, and the white solid that was produced was separated out. After dissolving the white solid using a small amount of chloroform, it was again added to a 300 ml methanol solution, and the reprecipitated white solid was separated out. Next, it was subjected to reduced-pressure drying at 40°C, thereby obtaining 12.1 g of a linear acryloyl-containing compound which has the subject bisphenol A epoxy resin whose epoxy groups have partially undergone ring opening as the main skeleton, and which is expressed by the following structural formula.

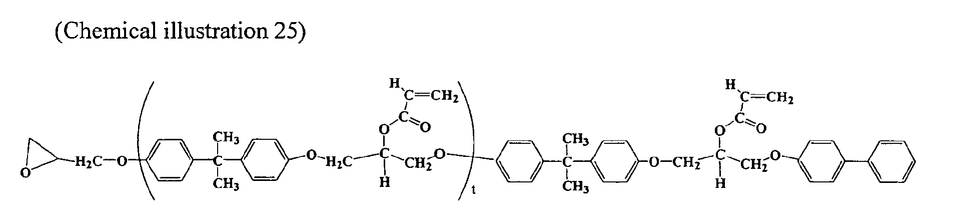

As a result of conducting ¹H-NMR measurement in the same manner as Working Example 1, by comparing the integral ratios of 6.80-7.18 ppm aromatic hydrogen, 5.83-6.44 ppm acryloyl-group hydrogen, and 2.74, 2.90 and 3.33 ppm epoxy-group hydrogen pertaining to the epoxy resin raw material and the product before and after the ester exchange reaction, it was found that the rate of introduction of acryloyl groups into the secondary hydroxyl groups of epoxy resin was 99 mol % or higher, and that the survival rate of terminal epoxy groups was approximately 52 mol%. The number average molecular weight of the obtained compound was 2500, and the quantity of acryloyl groups per molecule was 6.7.

### Working Example 9 Partial introduction of acryloyl groups

### (Ester exchange reaction of epoxy resin)

9.3 g of EPICLON AM-040-P (10 m equivalent), 100.0 g of ethyl acrylate, 0.5 g of the tristannoxane compound obtained in synthesis example 1 as a catalyst, and 1.0 g of p-methoxyphenol as a polymerization inhibitor were inserted, and reaction was commenced while introducing air. The reaction was conducted while the ethanol produced using the fractionating column at a reaction temperature of 95-98°C underwent reflux in a liquid mixture with ethyl acrylate, and the amount of removed ethanol was confirmed. At a point where the reaction had reached approximately 6 hours, the amount of removed ethanol was 0.76 g, and the reaction was terminated.

After termination of reaction, excess ethyl acrylate was removed by reduced-pressure distillation, and a small amount of toluene was added to the residue, after which reduced-pressure distillation was further conducted to remove excess ethyl acrylate.

The reaction mixture obtained by conducting the aforementioned reduced-pressure distillation was added to a 300 ml methanol solution, and the white solid that was produced was separated out. After dissolving the white solid using a small amount of chloroform, it was again added to a 300 ml methanol solution, and the reprecipitated white solid was separated out. Next, it was subjected to reduced-pressure drying at 40°C, thereby obtaining 11.1 g of a linear acryloyl-containing compound in which acryloyl groups had been introduced into a portion of the hydroxyl groups of the bisphenol A epoxy resin, and which is expressed by the following structural formula.

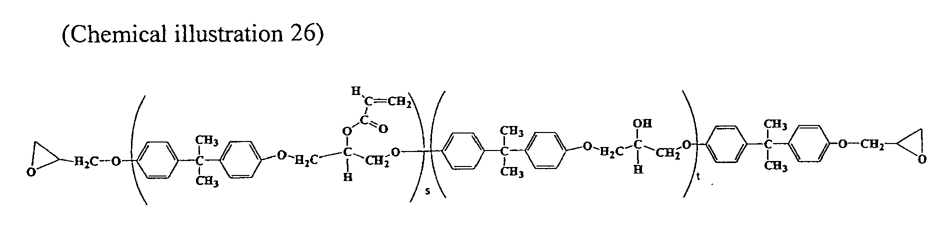

(Provided that what is illustrated is that the structural units having acryloyl groups and the structural units having hydroxyl groups in the aforementioned structural formula are randomly bonded.)

As a result of conducting ¹H-NMR measurement in the same manner as Working Example 1, by comparing the integral ratios of 6.80-7.18 ppm aromatic hydrogen, 5.83-6.44 ppm acryloyl-group hydrogen, and 2.74, 2.90 and 3.33 ppm epoxy-group hydrogen pertaining to the epoxy resin raw material and the product before and after the ester exchange reaction, it was found that the rate of introduction of acryloyl groups into the secondary hydroxyl groups of epoxy resin was 55 mol %, and that the survival rate of terminal epoxy groups was approximately 95 mol%. The number average molecular weight of the obtained compound was 2150, and the quantity of acryloyl groups per molecule was 3.1.

Working Example 10 Partial ring opening of epoxy groups, and partial introduction of acryloyl groups

### (Ester exchange reaction of epoxy resin)

12.0 g of the biphenylene-denatured bisphenol A epoxy resin in side chains synthesized in the aforementioned Working Example 8, 100.0 g of ethyl acrylate, 0.5 g of the tristannoxane compound obtained in synthesis example 1 as a catalyst, and 1.0 g of p-methoxyphenol as a polymerization inhibitor were inserted into a reaction flask provided with an agitator, air induction tube, thermometer and fractionating column, and reaction was commenced while introducing air. The reaction was conducted while the ethanol produced using the fractionating column at a reaction temperature of 95-98°C underwent reflux in a liquid mixture with ethyl acrylate, and the amount of removed ethanol was confirmed. At a point where the reaction had reached approximately 6 hours, the amount of removed ethanol was 0.76 g, and the reaction was terminated.

After termination of reaction, excess ethyl acrylate was removed by reduced-pressure distillation, and a small amount of toluene was added to the residue, after which reduced-pressure distillation was further conducted to remove excess ethyl acrylate.

The reaction mixture obtained by conducting the aforementioned reduced-pressure distillation was added to a 300 ml methanol solution, and the white solid that was produced was separated out. After dissolving the white solid using a small amount of chloroform, it was again added to a 300 ml methanol solution, and the reprecipitated white solid was separated out. Next, it was subjected to reduced-pressure drying at 40°C, thereby obtaining 13.7 g of a linear acryloyl-containing compound in which acryloyl groups had been introduced into a portion of the hydroxyl groups of the biphenylene-denatured bisphenol A epoxy resin, and which is expressed by the following structural formula.

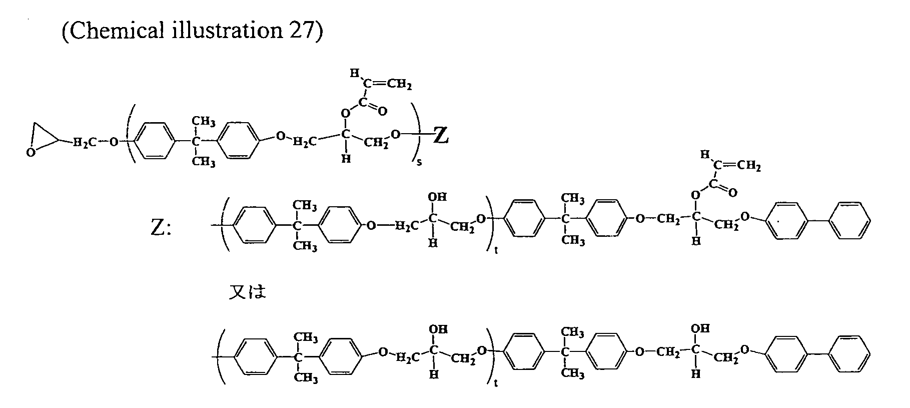

(Provided that what is illustrated is that the structural units having acryloyl groups and the structural units having hydroxyl groups in the aforementioned structural formula are randomly bonded.)

As a result of conducting ¹H-NMR measurement in the same manner as Working Example 1, by comparing the integral ratios of 6.80-7.18 ppm aromatic hydrogen, 5.83-6.44 ppm acryloyl-group hydrogen, and 2.74, 2.90 and 3.33 ppm epoxy-group hydrogen pertaining to the epoxy resin raw material and the product before and after the ester exchange reaction, it was found that the rate of introduction of acryloyl groups into the secondary hydroxyl groups of epoxy resin was 57 mol %, and that the survival rate of terminal epoxy groups was approximately 51 mol%. The number average molecular weight of the obtained compound was 2300, and the quantity of acryloyl groups per molecule was 3.1.

### Working Example 11

### (11-1) Synthesis of biphenylene-denatured bisphenol A epoxy resin

18.7 g (20 m equivalent) of EPICLON AM-040-P, 4.1 g (24 mmol) of 4-phenyl phenol, 0.26 ml (0.12 mol%) of a 65% ethyl triphenyl phosphonium ethanol acetate solution, and 50 ml of N,N-dimethyl acetoamide reacted for 6 hours at 120°C under a nitrogen atmosphere. After being left to cool, instillation into 150 ml of water was conducted, and the obtained precipitate was washed twice with methanol, after which it was subjected to reduced-pressure drying at 60°C to obtain biphenylene-denatured bisphenol A epoxy resin. The amount of the obtained product was 22.1 g, and the yield was 100%.

The measurement results of ¹H-NMR (AL300 manufactured by Japan Electron Optics Laboratory Co., Ltd., 300 MHz) for the obtained biphenylene-denatured bisphenol A epoxy resin are shown below.
¹H-NMR (CDCl₃) measurement results:
δ (ppm): 7.55-6.75 (m), 4.40-3.90 (m), 1.62 (s)

### (11-2) Ester exchange reaction of biphenylene-denatured bisphenol A epoxy resin

12.0 g of biphenylene-denatured bisphenol A epoxy resin synthesized as described in (11-1) above, 120.0 g of ethyl acrylate, 0.6 g of the tristannoxane compound obtained in synthesis example 1 as a catalyst, and 1.2 g of p-methoxyphenol as a polymerization inhibitor were inserted into a reaction flask provided with an agitator, air induction tube, thermometer and fractionating column, and reaction was commenced while introducing air. The reaction was conducted for 24 hours while the ethanol produced using the fractionating column at a reaction temperature of 95-98°C underwent reflux removal in a liquid mixture with ethyl acrylate.

After termination of reaction, excess ethyl acrylate was removed by reduced-pressure distillation, and a small amount of toluene was added to the residue, after which reduced-pressure distillation was further conducted to remove excess ethyl acrylate.

The reaction mixture obtained by conducting the aforementioned reduced-pressure distillation was added to a 300 ml methanol solution, and the white solid that was produced was separated out. After dissolving the white solid using a small amount of chloroform, it was again added to a 300 ml methanol solution, and the reprecipitated white solid was separated out. Next, it was subjected to reduced-pressure drying at 40°C, thereby obtaining 13.6 g of a linear acryloyl-containing compound which has the subject biphenylene-denatured bisphenol A epoxy resin as the main skeleton, into which acryloyl groups have been introduced, and which is expressed by the following structural formula.

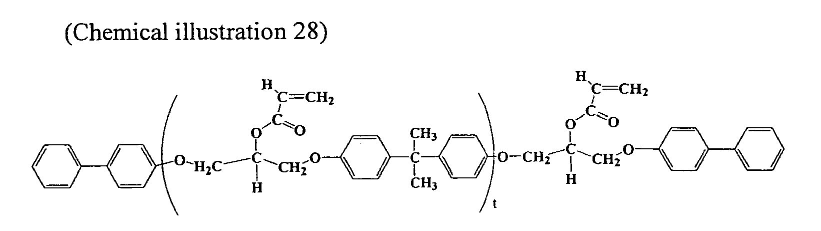

As a result of conducting ¹H-NMR measurement in the same manner as Working Example 1, by comparing the integral ratios of 6.80-7.18 ppm aromatic hydrogen and 5.83-6.44 ppm acryloyl-group hydrogen pertaining to the epoxy resin raw material and the product before and after ester exchange reaction, it was found that the rate of introduction of acryloyl groups into the secondary hydroxyl groups of epoxy resin was 99 mol %. The number average molecular weight of the obtained compound was 2750, and the quantity of acryloyl groups per molecule was 7.7.

Working Example 12 Ester exchange reaction with polystannoxane catalyst formation within the system
Ester exchange reaction of biphenylene-denatured bisphenol A epoxy resin was conducted in the same manner as Working Example 11-2, except that 0.6 g of dimethyl tin dichloride and 0.3 g of sodium methoxide were used instead of the 0.6 g of the tristannoxane compound obtained in Synthesis Example 1 used in the aforementioned Working Example (11-2), and a linear acryloyl-containing compound was obtained which has the subject biphenylene-denatured bisphenol A epoxy resin as the main skeleton, into which acryloyl groups have been introduced, and which is expressed by the aforementioned structural formula.

As a result of conducting ¹H-NMR measurement in the same manner as Working Example 1, by comparing the integral ratios of 6.80-7.18 ppm aromatic hydrogen and 5.83-6.44 ppm acryloyl-group hydrogen pertaining to the epoxy resin raw material and the product before and after ester exchange reaction, findings identical to those with the compound obtained in the aforementioned Working Example (11-2) were made.

### Working Example 13

(13-1) Synthesis of biphenylene-denatured xanthene skeleton-containing epoxy resin 9.72 g of the xanthene-biphenylene copolymer type epoxy resin obtained in Working Example 3-1, 4.1 g (24 mmol) of 4-phenyl phenol, 26.2 mg (0.1 mmol) of triphenyl phosphonium, and 50 ml of N,N-dimethyl acetoamide reacted for 6 hours at 130°C under a nitrogen atmosphere. After being left to cool, instillation into 100 ml of water was conducted, and the obtained precipitate was washed twice with methanol, after which it was subjected to reduced-pressure drying at 60°C to obtain biphenylene-denatured xanthene skeleton-containing epoxy resin. The amount obtained was 13.2 g, and the yield was 99%.

The measurement results of ¹H-NMR (AL300 manufactured by Japan Electron Optics Laboratory Co., Ltd., 300 MHz) for the obtained biphenylene-denatured xanthene skeleton-containing epoxy resin are shown below.
¹H-NMR (CDCl₃) measurement results:
δ (ppm): 7.54-7.00 (m), 5.21 (s), 4.35-3.80 (m), 2.40-2.08 (m)

### (13-2) Ester exchange reaction of biphenylene-denatured xanthene skeleton-containing epoxy resin

Ester exchange reaction of epoxy resin was conducted in the same manner as Working Example 11, except that 9.7 g of the biphenylene-denatured xanthene skeleton-containing epoxy resin synthesized in 13-1 above was used instead of the 12.0 g of biphenylene-denatured bisphenol-A epoxy resin of Working Example 11-2, and a linear acryloyl-containing compound was obtained which has the subject biphenylene-denatured xanthene skeleton epoxy resin as the main skeleton, into which acryloyl groups have been introduced, and which is expressed by the following structural formula.

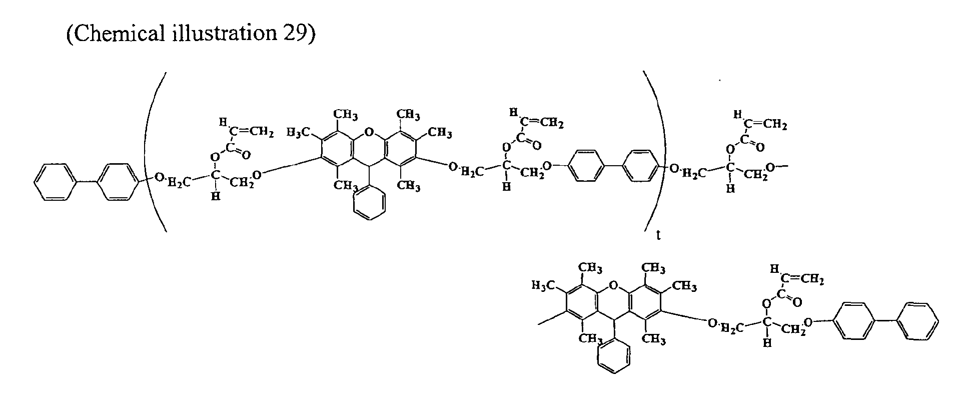

(Provided that, as the xanthene skeleton-containing epoxy resin used as raw material has a cycle unit, there are also parts where mated xanthene skeletons are connected by epichlorohydrin residue, and acryloyl groups are also introduced at the secondary hydroxyl groups of the pertinent epichlorohydrin residue parts, but such parts are omitted from this structural formula.)

As a result of conducting ¹H-NMR measurement in the same manner as Working Example 1, by comparing the integral ratios of aromatic hydrogen and acryloyl-group hydrogen pertaining to the epoxy resin raw material and the product before and after ester exchange reaction, it was found that the rate of introduction of acryloyl groups into the secondary hydroxyl groups of epoxy resin was 99 mol %. The number average molecular weight of the obtained compound was 2500, and the quantity of acryloyl groups per molecule was 6.

### Working Example 14

### (14-1) Synthesis of bisphenol-A biphenylene-denatured xanthene skeleton-containing epoxy resin

Synthesis of epoxy resin was conducted in the same manner as Working Example 13-1, except that 9.8 g of the xanthene-bisphenol A copolymer type epoxy resin synthesized in accordance with Working Example 5-1 was used instead of the 9.72 g of xanthene-biphenylene copolymer type epoxy resin of Working Example 13 synthesized in accordance with Working Example 3-1, and a bisphenol-A biphenylene-denatured xanthene skeleton-containing epoxy resin was obtained. The amount obtained was 13.3 g, and the yield was 97%.

The measurement results of ¹H-NMR (AL300 manufactured by Japan Electron Optics Laboratory Co., Ltd., 300 MHz) for the obtained bisphenol-A biphenylene-denatured xanthene skeleton-containing epoxy resin are shown below.
¹H-NMR (CDCl₃) measurement results:
δ (ppm): 7.54-6.60 (m), 5.21 (s), 4.35-3.80 (m), 2.40-2.08 (m), 1.62 (s)

### (14-2) Ester exchange reaction of bisphenol-A biphenylene-denatured xanthene skeleton-containing epoxy resin

Ester exchange reaction of epoxy resin was conducted in the same manner as Working Example 10, except that 12.0 g of the biphenylene-denatured bisphenol-A epoxy resin of Working Example 10 was replaced by the 10.0 g of bisphenol-A biphenylene-denatured xanthene skeleton-containing epoxy resin synthesized in 14-1 above, and a linear acryloyl-containing compound was obtained which has the subject bisphenol-A biphenylene-denatured xanthene skeleton-containing epoxy resin as the main skeleton, into which acryloyl groups have been introduced, and which is expressed by the following structural formula.

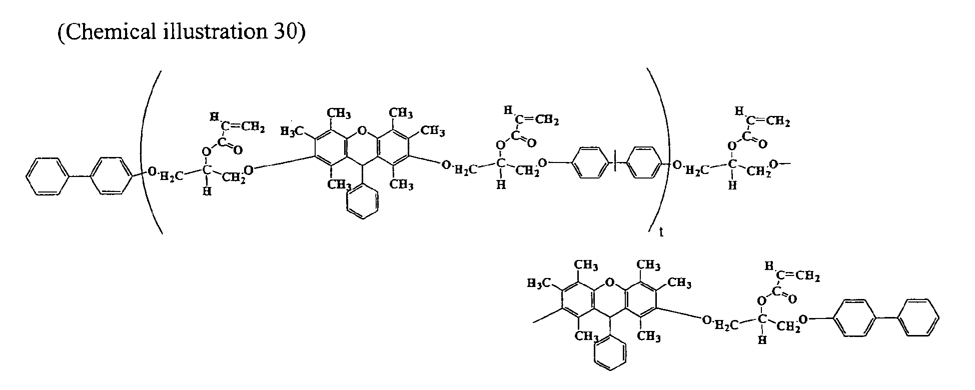

(Provided that, as the xanthene skeleton-containing epoxy resin used as raw material has a cycle unit, there are also parts where mated xanthene skeletons are connected by epichlorohydrin residue, and acryloyl groups are also introduced at the secondary hydroxyl groups of the pertinent epichlorohydrin residue parts, but such parts are omitted from this structural formula.)

As a result of conducting ¹H-NMR measurement in the same manner as Working Example 1, by comparing the integral ratios of aromatic hydrogen and acryloyl-group hydrogen pertaining to the epoxy resin raw material and the product before and after ester exchange reaction, it was found that the rate of introduction of acryloyl groups into the secondary hydroxyl groups of epoxy resin was 99 mol %. The number average molecular weight of the obtained compound was 4200, and the quantity of acryloyl groups per molecule was 10.

### Working Example 15

### (15-1) Synthesis of biphenylene-denatured tetrakisphenol ethane epoxy resin

9.8 g (50 m equivalent, epoxy equivalent 196) of brand name jER1031S (tetrakisphenol ethane epoxy resin) of Japan Epoxy Resin Co., Ltd., 11.9 g (70 mmol) of 4-phenylphenol, 0.21 ml (0.1 mol%) of a 65% ethyltriphenyl phosphonium ethanol acetate solution, and 40 ml of N,N-dimethyl acetoamide reacted for 4 hours at 160°C under a nitrogen atmosphere. After being left to cool, instillation into 100 ml of water was conducted, and the obtained precipitate was washed twice with methanol, after which it was subjected to reduced-pressure drying at 70°C to obtain biphenylene-denatured tetrakisphenol ethane epoxy resin. The amount of obtained product was 17.6 g, and the yield was 96%.

### (15-2) Ester exchange reaction of biphenylene-denatured tetrakisphenol ethane epoxy resin (synthesis of acrylate)

Ester exchange reaction of epoxy resin was conducted in the same manner as Working Example 10, except that 10.7 g of the biphenylene-denatured tetrakisphenol ethane epoxy resin synthesized in 15-1 above was used instead of 10.0 g of EPICLON AM-040-P, and the target star acryloyl-containing compound expressed by the following structural formula was obtained.

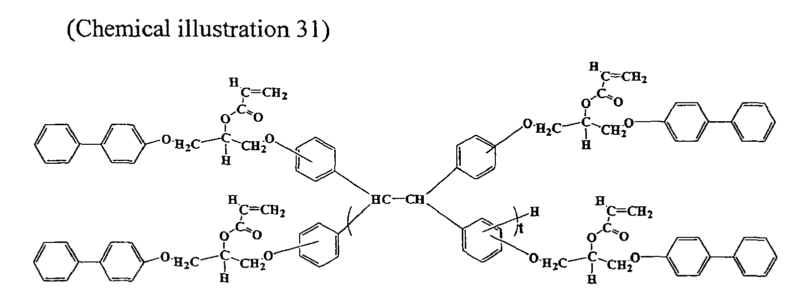

As a result of conducting ¹H-NMR measurement in the same manner as Working Example 1, by comparing the integral ratios of aromatic hydrogen and acryloyl-group hydrogen pertaining to the epoxy resin raw material and the product before and after ester exchange reaction, it was found that the rate of introduction of acryloyl groups into the secondary hydroxyl groups of epoxy resin was 99 mol % or higher. The number average molecular weight of the obtained compound was 2300, and the quantity of acryloyl groups per molecule was 5.5.

### Working Example 16 Ester exchange reaction of tetrakisphenylol ethane epoxy resin (synthesis of methacrylate)

The same procedure as Working Example 1 was conducted - except that 10.7 g of the tetrakisphenylol ethane epoxy resin obtained in Working Example 15-1 was used as the epoxy resin, and 135.0 g of methyl methacrylate was used instead of 120.0 g of ethyl acrylate - and the target star methacryloyl-containing compound expressed by the following structural formula was obtained.

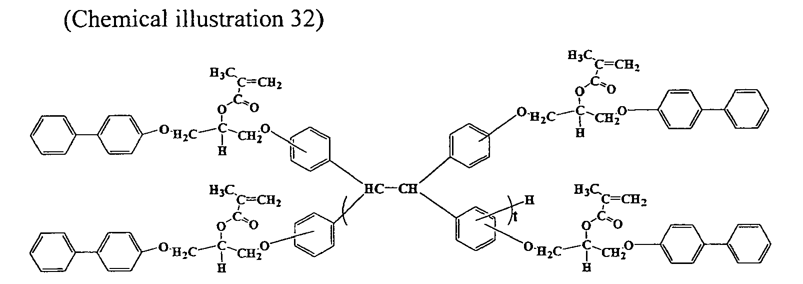

By conducting ¹H-NMR measurement in the same manner as Working Example 1, and by comparing the integral ratios of aromatic hydrogen and methacryloyl-group hydrogen pertaining to the epoxy resin raw material and the product before and after ester exchange reaction, it was found that the rate of introduction of methacryloyl groups into the secondary hydroxyl groups of epoxy resin was 99 mol % or higher. The average value of t, which is the cycle number in the aforementioned structural formula, was approximately 2.0, the number average molecular weight of the obtained compound was 2380, and the quantity of methacryloyl groups per molecule was 5.5.

### Reference example

5.0 g of EPICLON AM-040-P, 40 ml of chloroform, 3.3 g of pyridine, and 1.2 g of p-methoxyphenol as a polymerization inhibitor were introduced into a reaction flask provided with an agitator, thermometer and dropping funnel, and agitation was conducted to dissolve the liquid reaction mixture. Next, instillation of 1.92 g (21.2 mmol) of chloride acrylate was conducted from the dropping funnel during agitation. On this occasion, the instillation was conducted with use of an ice bath, after which agitation was conducted for a further 8 hours at 40°C, and reaction was terminated. After termination of reaction, the reaction liquid was diluted by adding 40 ml of chloroform. Subsequently, washing was sequentially conducted with 100 ml of an aqueous solution of 5% hydrochloric acid, an aqueous solution of saturated sodium hydrogencarbonate, and an aqueous solution of saturated sodium chloride, after which drying was conducted with magnesium sulfate, and filtration and reduced-pressure concentration were conducted. The obtained solid was washed several times with methanol, after which it was filtered, and subjected to reduced-pressure drying to obtain 5.5 g of the solid.

As a result of conducting ¹H-NMR measurement in the same manner as the working examples, peaks of epoxy-group hydrogen were found in small quantities in the vicinity of 2.74, 2.90 and 3.33 ppm, but acryloyl-group hydrogen was not found in the vicinity of 5.83-6.44 ppm. As a result, it was learned that there had been no introduction of acryloyl groups into hydroxyl groups.

### Test example 1 and Reference test example 1: Comparison of hardenability under radical polymerization

Hardenability with radical polymerization of a linear acryloyl-containing compound whose main skeleton is constituted by the bisphenol A synthesized in Working Example 1 and whose terminals are epoxy groups (hereinafter "Compound 1") was compared with that of diacrylate BP4PA of bisphenol A propylene oxide-denatured epoxy resin (manufactured by Kyoeisha Chemical Co., Ltd.).

(Table 1)

**Table 1 Preparation of radical polymerization compositions (compounding ratio/mass parts)**

| | Composition 1 | Reference composition 1 |
|---|---|---|
| Compound 1 | 100 | - |
| BP4PA | - | 100 |
| Ethyl acetate | 40 | - |
| I-651 | 1 | 1 |

Footnote to Table 1:
I-651: radical polymerization catalyst, manufactured by Ciba-Geigy Co.

### Test method:

Films of the aforementioned compositions were prepared on sloped glass using bar coater #5. A polymerization reaction was conducted at an irradiation intensity of 50 mJ/cycle using a high-pressure mercury lamp (120 watts) under a cold mirror, and the irradiation frequency was measured until the film surface became tuck-free and hardened.

(Table 2)

**Table 2 Hardening Test**

| Composition | Test example 1 | Reference test example 1 |
|---|---|---|
| Frequency until tuck-free (cycles) | 1 | 7 |

Test example 2 and reference test example 2: comparison of hardenability under cationic polymerization
In the same manner as test example 1 and reference example 1, hardenability under cationic polymerization was compared using two types of acryloyl-containing compounds having bisphenol A as the main skeleton.

(Table 3)

**Table 3 Preparation of cationic polymerization compositions (compound ratio/mass parts)**

| | Composition 1 | Reference composition 1 |
|---|---|---|
| Compound 1 | 100 | - |
| BP4PA | - | 100 |
| Ethyl acetate | 40 | - |
| UVI-6990 | 2 | 2 |

Footnote to Table 3:
UVI-6990: cationic polymerization catalyst, manufactured by Ciba-Geigy Co.

### Test method:

Films of the aforementioned compositions were prepared on sloped glass using bar coater #5. A polymerization reaction was conducted at an irradiation intensity of 50 mJ/cycle using a metal halide lamp (80 watts) under a cold mirror, and the irradiation frequency was measured until the film surface became tuck-free and hardened.

(Table 4)

**Table 4 Hardening Test**

| Composition | Test example 1 | Reference test example 1 |
|---|---|---|
| Frequency until tuck-free (cycles) | 2 | 10 < (not hardened) |

From the foregoing results, it could be confirmed that the (meth)acryloyl-containing compounds of the present invention exhibit excellent radical hardenability and cationic hardenability.

### INDUSTRIAL APPLICABILITY

The linear (meth)acryloyl-containing compounds of the present invention have an average of 3 (meth)acryloyl groups in a single molecule, and have higher hardenability and higher sensitivity than conventional bifunctional linear epoxy (meth)acrylates. In structural terms, by selecting the epoxy resin to be used as raw material, molecular weight per (meth)acryloyl group (that is, the concentration of (meth)acryloyl groups) can be easily made to order, and the crosslink density of the hardened material can be adjusted without using other acrylic monomers and the like in combination. Moreover, it is also possible not to leave any hydroxyl groups in the molecule, thereby enabling use as material in precise electrical applications and the like.

As the star (meth)acryloyl-containing compounds of the present invention are multifunctional, they excel in hardenability and sensitivity, and as molecular weight per (meth)acryloyl group is also large, excessive hardening does not occur, enabling obtainment of hardened material which also has appropriate toughness. Moreover, it is also possible not to leave any hydroxyl groups in the molecule, thereby enabling use as material in precise electrical applications and the like. Furthermore, in cases where there are aromatic rings at the central part of the star-shaped structure, intermolecular π-π stacking capability can also be imparted, and the heat resistance, corrosion resistance, mechanical strength and so on of the hardened material can be enhanced, thereby demonstrating great industrial significance.

## Claims

1. A linear (meth)acryloyl-containing compound, comprising a chemical compound having a structure in which structural units expressed by the following general formula (1) 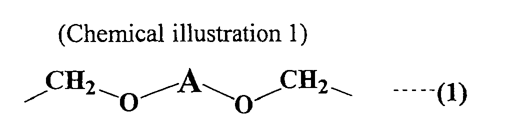 (In Formula (1), A is a bivalent hydrocarbon radical which may contain heteroatoms.) are connected by the following general formula (2) or (3) 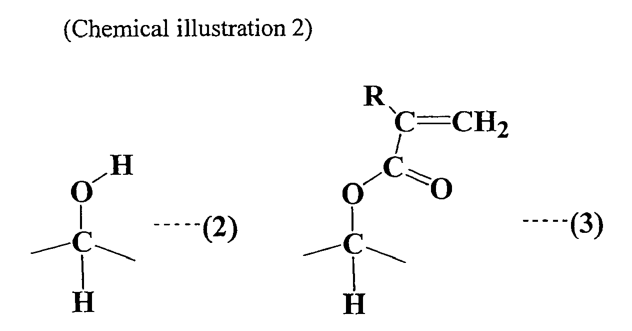 (In Formula (3), R is a hydrogen atom or a methyl group.)
(provided that the same substance or different substances may be connected as **A** of the aforementioned general formula (1)), and the molecular ends are epoxy groups or are expressed by the following general formula (4) 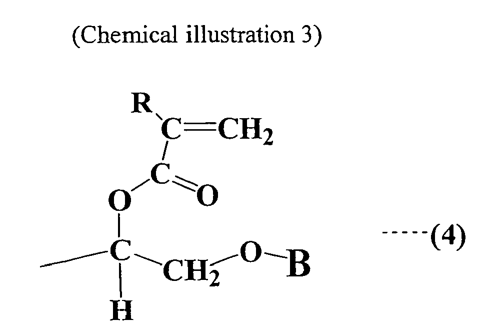 (In Formula (4), R is a hydrogen atom or methyl group, and **B** is a monovalent hydrocarbon radical.), wherein the totality of the structural units expressed by said general formula (3) or said general formula (4) includes an average of 3 or more in a single molecule, and the number average molecular weight is 500-10,000.

2. The linear (meth)acryloyl-containing compound according to claim 1, wherein **A** of said general formula (1) is a group selected from 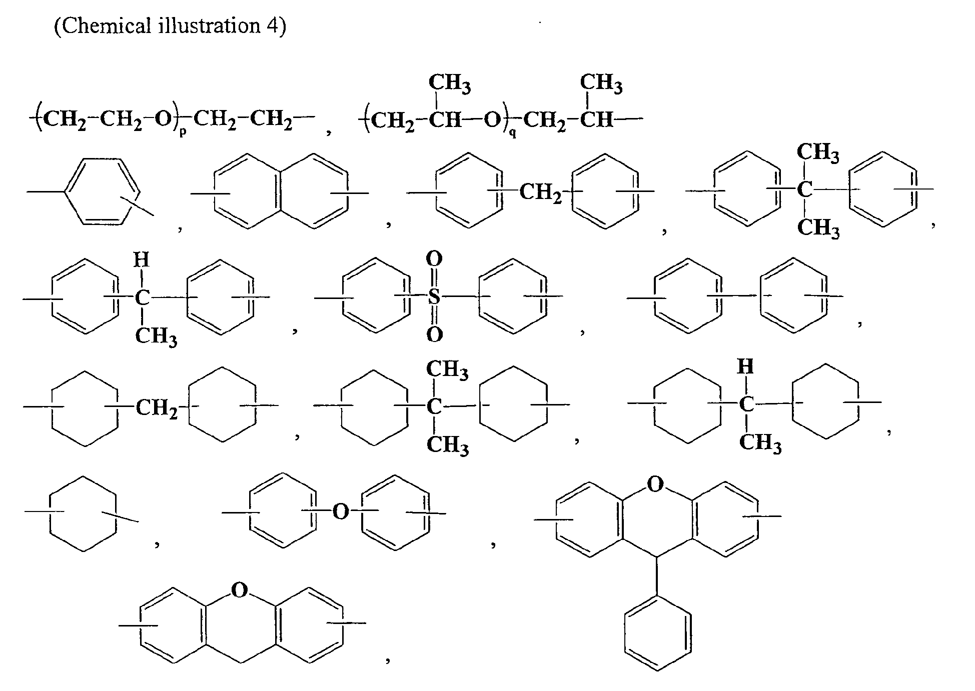 (In the formula, **p** and **q** are integers of 1 to 6. Provided that it is also acceptable to have alkyl groups with a carbon number of 1 to 4 as substituents on the ring.).

3. The linear (meth)acryloyl-containing compound according to claim 1, wherein **B** of said general formula (4) is a group selected from 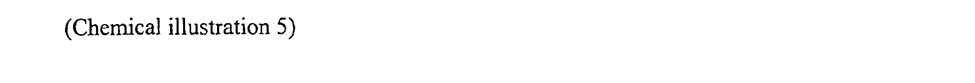 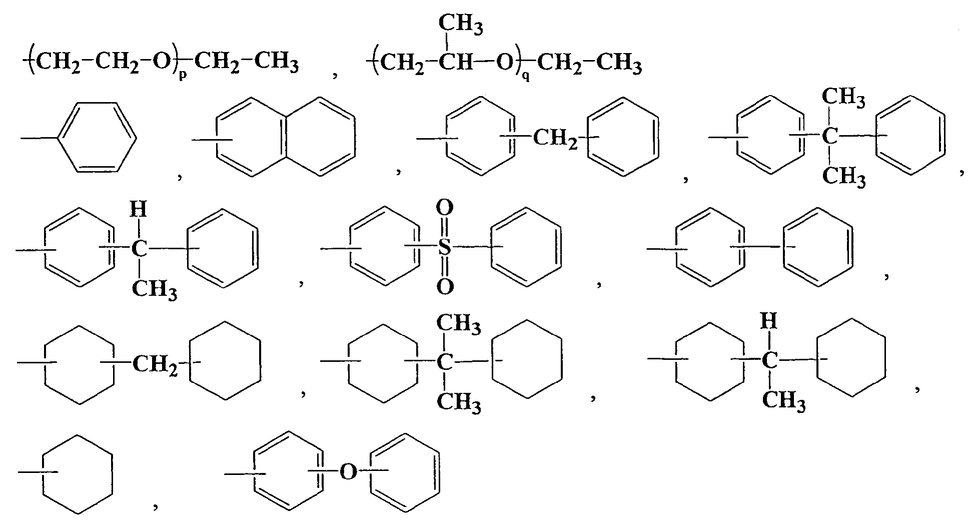 (In the formula, p and q are integers of 1 to 6. Provided that it is also acceptable to have alkyl groups with a carbon number of 1 to 4 as substituents on the ring.).

4. The linear (meth)acryloyl-containing compound according to claim 1, wherein the molecular ends are epoxy groups.

5. The linear (meth)acryloyl-containing compound according to any of the claims 1 to 4, wherein R of said general formulas (3) and (4) is a hydrogen atom.

6. A star (meth)acryloyl-containing compound expressed by the following general formula (5) 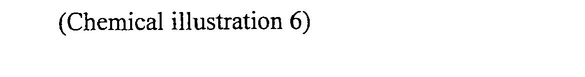 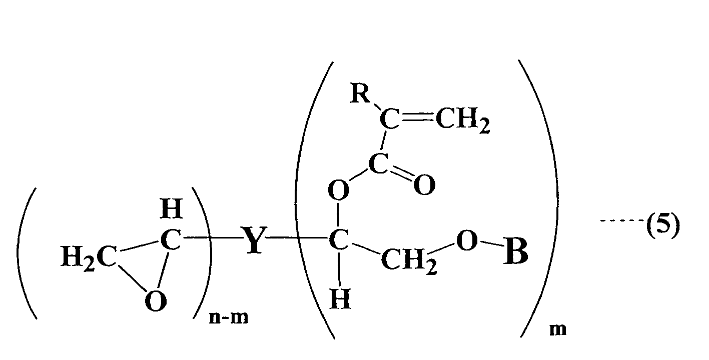 (In Formula (5), **R** is a hydrogen atom or a methyl group, **B** is a monovalent hydrocarbon radical, **Y** is a residue obtained by excluding epoxy groups from multifunctional epoxy resin having an average of **n** epoxy groups (provided that **n** is 3 or more), and m is an integer of 3 or more (provided that **n** ≥ **m**).), wherein the number average molecular weight is 800-10,000.

7. The star (meth)acryloyl-containing compound according to claim 6, wherein **B** of said general formula (5) is a group selected from 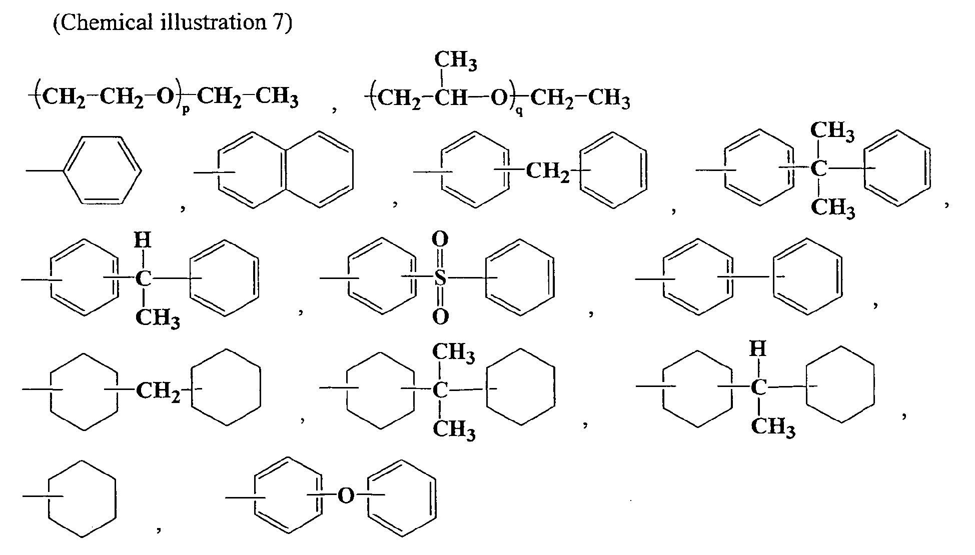 (In the formula, **p** and **q** are integers of 1 to 6. Provided that it is also acceptable to have alkyl groups with a carbon number of 1 to 4 as substituents on the ring.).

8. The star (meth)acryloyl-containing compound according to claim 6, wherein **Y** of said general formula (5) is a group selected from 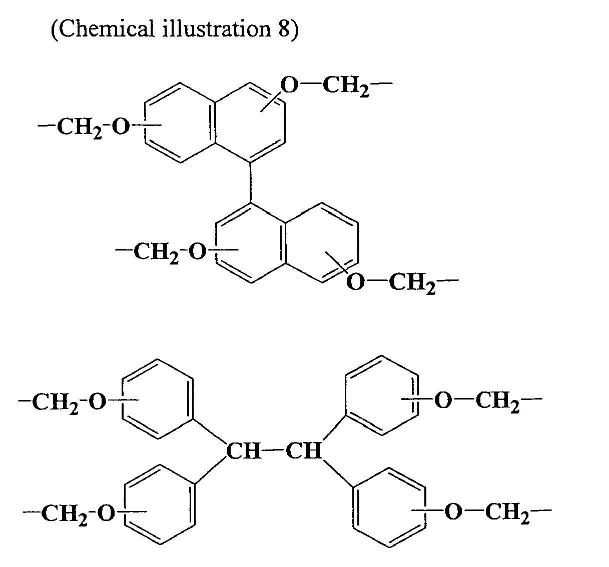 (Provided that it is also acceptable to have alkyl groups with a carbon number of 1 to 4 as substituents on the ring.).

9. The star (meth)acryloyl-containing compound according to any of the claims 6 to 8, wherein **R** of said general formula (5) is a hydrogen atom.

10. A method of manufacturing (meth)acryloyl-containing compounds, which uses epoxy resin (I) having 3 or more of the structural units expressed by the following structural formula (6) 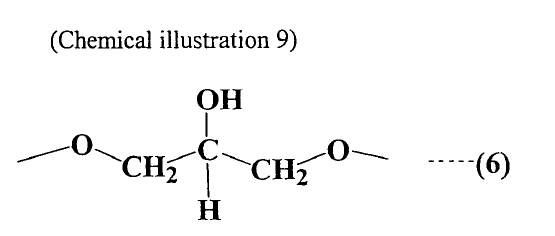 in a single molecule, and alkyl ester (meth)acrylate (II), and which obtains a compound having on average 3 or more (meth)acryloyl groups in a single molecule by conducting an ester exchange reaction in the presence of a polystannoxane catalyst (III) to introduce (meth)acryloyl groups at hydroxyl groups of said general formula (6).

11. The method of manufacturing (meth)acryloyl-containing compounds according to claim 10, wherein the epoxy resin (I) is bisphenol epoxy resin, tetrakisphenol ethane epoxy resin, epoxy resin having a xanthene skeleton, or epoxy resin obtained by having these epoxy resins undergo elongation reaction with a dihydroxy compound.

12. The method of manufacturing (meth)acryloyl-containing compounds according to claim 10, wherein the epoxy resin (I) is denatured epoxy resin where bisphenol epoxy resin, tetrakisphenol ethane epoxy resin, epoxy resin having a xanthene skeleton, or epoxy resin obtained by having these epoxy resins undergo elongation reaction with a dihydroxy compound is further subjected to the ring opening of its epoxy groups by a hydroxy compound.

13. The method of manufacturing (meth)acryloyl-containing compounds according to claim 10, wherein the alkyl groups in alkyl ester (meth)acrylate (II) are alkyl groups with a carbon number of 1 to 6, and the (meth)acryloyl groups are acryloyl groups.

14. The method of manufacturing (meth)acryloyl-containing compounds according to any of the claims 10 to 13, wherein the polystannoxane catalyst (III) is a catalyst expressed by the following general formula (7) 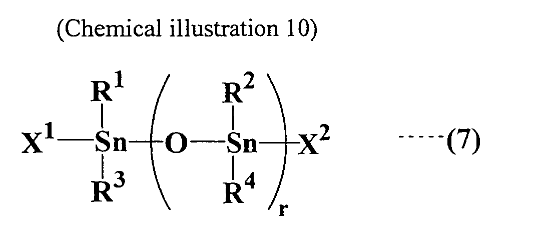 (In formula (7), **R¹-R⁴** are respectively independent methyl groups or ethyl groups; **X¹** and **X²** are respectively independent electron attractive groups having lone-pair electrons on atoms which bond with stannic atoms; and r is an integer of 1 to 8.).

15. The method of manufacturing (meth)acryloyl-containing compounds according to claim 12, wherein, at the time of ester exchange reaction, a stannic compound illustrated by the following general formula (8) 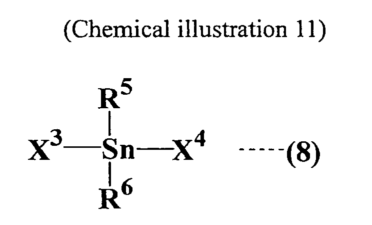 (In formula (8), **R⁵** and **R⁶** are respectively independent methyl groups or ethyl groups, and **X³** and **X⁴** are respectively independent electron attractive groups having lone-pair electrons on atoms which bond with stannic atoms.)
and an alkaline compound are introduced into the reaction system, a polystannoxane catalyst (III) is formed within the system, and the ester exchange reaction is conducted.
